(19) Europäisches Patentamt
European Patent Office
Office européen des brevets

(11) EP 3 728 343 B1

(12) **EUROPEAN PATENT SPECIFICATION**

(45) Date of publication and mention of the grant of the patent:
**31.05.2023 Bulletin 2023/22**

(21) Application number: **18833360.3**

(22) Date of filing: **14.12.2018**

(51) International Patent Classification (IPC):
***C08F 8/32*** *(2006.01)* ***C08F 293/00*** *(2006.01)*
***C08F 212/08*** *(2006.01)* ***C08F 222/06*** *(2006.01)*
***C08F 220/18*** *(2006.01)* ***C09D 11/00*** *(2014.01)*

(52) Cooperative Patent Classification (CPC):
(C-Sets available)
**C08F 293/005; C08F 8/32; C09B 67/009; C09D 11/00;** C08F 212/08; C08F 2438/00; C08F 2438/03 (Cont.)

(86) International application number:
**PCT/US2018/065676**

(87) International publication number:
**WO 2019/125940 (27.06.2019 Gazette 2019/26)**

(54) **STYRENE MALEAMIDE BLOCK COPOLYMER PIGMENT DISPERSANT**

BLOCKCOPOLYMER-PIGMENTDISPERGIERMITTEL MIT STYROL-MALEAMID

DISPERSANT DE PIGMENT EN COPOLYMÈRE SÉQUENCÉ DE STYRÈNE-MALÉAMIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2017 US 201762608333 P**

(43) Date of publication of application:
**28.10.2020 Bulletin 2020/44**

(73) Proprietors:
- **Lubrizol Advanced Materials, Inc.**
  **Cleveland, OH 44141-3247 (US)**
- **The University Of Warwick**
  **Coventry CV4 8UW (GB)**

(72) Inventors:
- **SHOOTER, Andrew J.**
  **Cleveland, Ohio 44141-3247 (US)**
- **JENNINGS, Robert A.**
  **Cleveland, Ohio 44141-3247 (US)**
- **PERRIER, Sebastien**
  **Coventry, Warwickshire CV4 8UW (GB)**
- **AKRACH, Majda**
  **Coventry, Warwickshire CV4 8UW (GB)**

(74) Representative: **Bradley, Josephine Mary**
**Kilburn & Strode LLP**
**Lacon London**
**84 Theobalds Road**
**London WC1X 8NL (GB)**

(56) References cited:
**WO-A1-2017/132380**
**JP-A- 2013 241 604**
**US-A1- 2010 081 769**
**US-A1- 2010 099 813**
**US-A1- 2010 240 826**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 8/32, C08F 293/005**

## Description

### FIELD OF INVENTION

The present invention relates to a polymeric dispersant from controlled radical polymerization of soluble (meth)acrylate or (meth)acrylamide blocks with styrene-maleic anhydride blocks. The anhydride groups of the styrene-maleic anhydride may be reacted with dialkylamino alkyl amines or aminoalkyl substituted nitrogen containing aromatic and/or heterocycles to form pendant tertiary amine type groups that can provide enhanced anchoring to a variety of pigments or particulate filler materials. The polymers may be diblock or up to ten alternating blocks.

### BACKGROUND OF THE INVENTION

Dispersants for pigments and other particulates are known. Dispersants generally have an anchoring portion of the molecule that has some attraction for and anchors to the pigment or particulate surfaces and a solubilizing portion that interacts favorably with the continuous phase. When the solubilizing portion is anchored to the pigment or particulate, the solubilizing portion acts as a barrier to aggregation of the particulate.

US 9,416,280 (WO2008/122606) relates to a dispersant from a copolymer of a monomer (A) and a monomer (B) often B is maleic anhydride. The anhydride group is reacted with (i) a compound containing at least one tertiary or heterocyclic amine site and at least one additional groups capable of reacting with the dicarboxylic acid or anhydride thereof, and (ii) a polyetheramine.

US 7,838,574 relates to a pigment dispersion with a copolymer dispersant having a hydrophobic block (A) and a hydrophilic block (B).

US 8,153,731 (DE102006062439) relates to comb polymers made by reacting styrene-maleic anhydride copolymer with primary amino-terminated polyalkylene oxide used as a wetting agent and/or dispersant. US 8,129,476 (DE102006062441 relates to similar comb polymers where the maleic anhydride units are derivatized with phosphate or quaternary ammonium functions.

US 4,755,563 relates to block copolymer dispersants containing ionic moieties. The block copolymers are preferably made by group transfer polymerization techniques and can be used as pigment dispersants. US 2010/081769 A1 discloses a process for producing a linear block copolymer comprising one or more acetoacetyl amine functional groups as pigment anchoring groups, said process comprising the steps of:

(A) forming a linear A-block by polymerizing ethylenically unsaturated A-block monomers using free radical polymerization in the presence of a catalytic chain transfer agent, wherein said A-block monomers are essentially free from hydroxyl monomers having hydroxyl functional groups;
(B) forming a linear AB-diblock copolymer having said linear A-block and a B-block by polymerizing said linear A-block and ethylenically unsaturated B-block monomers comprising one or more hydroxyl monomers having hydroxyl functional groups;
(C) optionally, forming a linear ABC-triblock copolymer having said linear AB-diblock copolymer and a C-block by polymerizing said linear AB-diblock copolymer and ethylenically unsaturated C-block monomers, wherein said C-block monomers are essentially free from said hydroxyl monomers;
(D) reacting said hydroxyl functional groups with an acetoacetate agent to convert said hydroxyl functional groups to acetoacetate functional groups; and
(E) reacting said acetoacetate functional groups with a primary amine to form said acetoacetyl amine functional groups in said block copolymer;

wherein said linear A-block and said C-block when present are essentially free from said acetoacetyl amine functional groups, and wherein said A-block monomers and said C-block monomers are the same or different.

### SUMMARY OF THE INVENTION

The invention is set out in the appended claims.

Controlled radical polymerization of block copolymer dispersant where the solvent solubilizing block(s) is typically (meth)acrylate and/or (meth)acrylamide repeat units and the anchoring block(s) and is typically styrene-maleic anhydride are useful to form dispersions of particulates in a nonpolar or polar organic medium. It is desirable if each block of solubilizing repeat units or anchoring repeat units is at least 5 and more desirably at least 10 consecutive units to enhance the surface activity of the final dispersant. Controlled free radical polymerization is useful to make such consecutive blocks of organic media soluble (such as acrylate type) repeating units and copolymer blocks of styrene type repeat units and free radically polymerizable di or tricarboxylic acid monomers (such as maleic anhydride type)

repeat units. Maleic anhydride likes to copolymerize in alternating steps with styrene free radically. So, the anchoring block typically has at least one styrene repeat unit between each maleic anhydride repeat unit.

A portion or all of the dicarboxylic acid repeating units are converted to having amide or imide linkages by reacting with an aminic species (having an amine group reactive with carboxylic acid to form an amide or imide linkage and at least one second amine group that is characterized as a tertiary amine or a cyclic amine containing structure (optionally with aromaticity) to form the final dispersant. The dicarboxylic acid (or anhydride thereof) groups of the styrene-maleic anhydride type segment may be reacted with dialkylamino alkyl amines and similar species (containing polyamines, imidazoles, pyrrolidine, morpholine, pyridine, piperidine, piperazine, pipecoline) containing at least one reactive primary amine and a tertiary amine or heterocyclic with an amine group(s) that can provide enhanced anchoring to a variety of pigments or particulate filler materials. The polymers may be diblock or up to 10 alternating blocks of solubilizing chains and anchoring chains.

It is desirable that the solubilizing chains not contain any significant amount of highly polar species such as (meth)acrylic acid repeat units. It is desirable that the anchoring block not contain highly polar groups or groups greater than 3 units of polyethylene oxide.

## DETAILED DESCRIPTION OF THE INVENTION

Block copolymers based on butylacrylate-co-styrene maleic anhydride post modified with dimethylamino propyl amine were found to be excellent pigment dispersants as fluid millbases and low pigment particle size distributions were achieved for the dispersion of Pigment Red 254.

Low particle size dispersions are desirable for highly transparent coatings such as those used in colour filters, also known as LCD (liquid crystal displays), or automotive tinted clear coats.

According to the invention there is provided a polar or nonpolar solvent-based composition, as defined in the appended claims, comprising a particulate solid, an organic solvent and a polymeric dispersant wherein the polymeric dispersant comprises:
at least 55 wt.%, 65 wt.%, or 75 wt.%, more desirably at least 85 wt.% and preferably at least 95 wt.% of a block copolymer structure of formula shown below:

$$\{(\text{solubilizing block})\text{-}(\text{anchoring block})\}_v$$

wherein the solubilizing block or the anchoring block can occur first and optionally there is one additional solubilizing or one additional anchoring block but such that the total number of solubilizing blocks does not exceed the maximum value of v and the total number of anchoring blocks does not exceed the maximum value of v (such as 5, 3, or 2 depending on the range of v);
wherein the solubilizing block is $-(A)_x-$ and the anchoring block is a copolymer of the structure $-\{(B)_y-(D)_z\}_u-$;
x is at least 5; and desirably 5 to 150, and more preferably 5 to 100;
y is at least 1 and can be from 1 to 10, more desirably 1 to 5;
z is generally 1 when derived from polymerizing maleic anhydride but can be 2, 3, 4 or 5, especially when derived by other dicarboxylic acids or anhydrides such as itaconic acid;
u is 1 to 25, preferably 2 to 10 or 2 to 20, more preferably 3 to 10 or 3 to 20;
u(y+z) is at least 5, desirably from 5 to 100, more preferably 5 to 50;
v is 1 to 5, preferably 1 to 3 and more preferably 1 to 2; and
with the remaining 45, 35, 25, 15, or 5 wt.% of the polymeric dispersant being chain initiating groups, chain terminating groups or inadvertently inserted repeating units, wherein repeating units of the A structure comprises about 25 to 80 wt.% of the dispersant, repeating units of the B structure comprises from about 5 to about 35 wt.% of the dispersant and combined repeating units of the D structure are from about 5 to about 50 wt.% of the dispersant, wherein said dispersant has a number average molecular weight at least 2500 daltons, preferably less than 75000 daltons, and more preferably 5000 to 20000 daltons.

### Solubilizing Block of the block copolymer dispersant.

It is desirable that at least 90, 95, 99 or 100 mole% of the A units are selected from the group consisting of $A_1$, $A_2$, $A_3$, $A_4$, $A_5$ and $A_6$ units, at least 80, 90, 95 or 98 mole% of the A repeat units in the block copolymer dispersant are selected from the groups consisting of $A_1$, $A_2$, and $A_3$ and the remainder of the A groups (such as 20 mole% or less, 10 mole% or less, 5 mole% or less and 2 mole% or less) are selected from $A_4$, $A_5$, or $A_6$. In one embodiment, it is desired that at least 80, 90 or 95 mole% of A is selected from $A_1$ and the remaining amounts of A are selected from the other units $A_2$ and or $A_3$ in amounts of 20 mole% or less, 10 mole% or less and 5 mole% or less and, $A_4$, $A_5$ and $A_6$ in the

amounts of 20 mole% or less, 10 mole% or less, and 5 mole% or less, and 2 or 1 mole% or less based on the total amount of A repeating units in the block copolymer dispersant. Since $A_4$ is similar to a repeat unit in the anchoring segment of the block copolymer dispersant, we don't want too many $A_4$ repeat units in the solubilizing portion of the block copolymer dispersant. Since $A_5$ and $A_6$ can have high molecular weights, even a small molar amount of $A_5$ or $A_6$ can add significant weight amounts of polar polymers to the block copolymer and thus these repeat units are also used in relatively low molar amounts.

Wherein $A_1$ is as defined below one or more repeating units derived from an alkyl(meth)acrylate of 4 to 24 carbon atoms, preferably a repeat unit of the structure

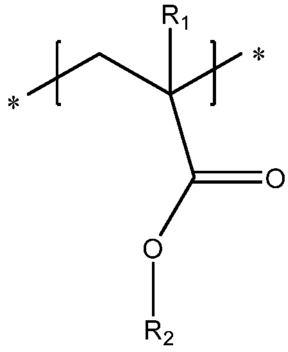

$A_1$

wherein $R_1$ is $CH_3$ or H, and $R_2$ is a linear or branched $C_{1-20}$ alkyl group more desirably $C_1$- $C_{16}$ alkyl group, (optionally including 1 or 2 heteroatoms such oxygen (resulting occasionally in a hydroxyl group or ether linkage or nitrogen)) wherein * indicates a covalent bond to the next/adjacent repeating units in the polymer or a covalent bond to the rest of a shown molecule, $A_1$ is a repeat unit from radically polymerizing an alkyl(meth)acrylate or mixture of alkyl(meth)acrylates, preferably alkyl acrylate and more preferably butyl acrylate. The (meth) means that a methyl group is optionally present. Typical alkyl (meth)acrylates that can be used as a co-monomer, include $C_{1-20}$ or desirably $C_1$-$C_{16}$ alkyl polymerisable ethylenically unsaturated monomer include methyl (meth)acrylate, ethyl (meth)acrylate, propyl (meth)acrylate, isopropyl (meth)acrylate, butyl (meth)acrylate, isobutyl (meth)acrylate, hexyl (meth)acrylate, 2-ethylhexyl (meth)acrylate, nonyl (meth)acrylate, lauryl (meth)acrylate, stearyl (meth)acrylate, cyclohexyl (meth)acrylate, isodecyl (meth)acrylate, isobornyl (meth)acrylate. Typical (meth)acrylates with heteroatoms that can be used as a comonomer include hydroxyethyl (meth)acrylate (e.g., HEMA), hydroxy butyl (meth)acrylate, ethylene glycol methyl ether (meth)acrylate, diethylene glycol ethyl ether (meth)acrylate, and di(ethylene glycol) 2-ethylhexyl ether (meth)acrylate.

Wherein $A_2$ is derived from polymerizing one or more repeating units disubstituted (meth)acrylamide monomers and is according to the formula below

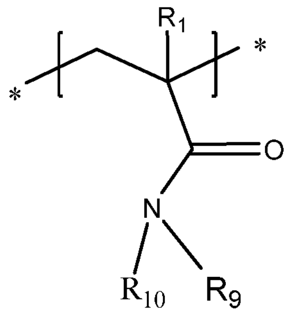

$A_2$

wherein $R_1$ is as defined above and $R_9$ and $R_{10}$ individually are $C_1$-$C_8$ alkyl or aromatic or combinations of alkyl and aromatic groups or combinations thereof, optionally with a hydroxyl group, and optionally $R_9$ and $R_{10}$ can be connected to each other to form $C_2$-$C_{16}$ cyclic groups, wherein the $R_9$ and $R_{10}$ groups are selected from an alkyl, alkanol or aromatic for example (meth)acrylamide, N-ethyl (meth)acrylamide, N-hydroxymethyl (meth)acrylamide, N-hydroxyethyl (meth)acrylamide, N'N-dimethyl (meth)acrylamide, N'N-diethyl (meth)acrylamide, N-isopropyl (meth)acrylamide, N-(isobutoxymethyl) methacrylamide, 3-(methoxypropyl)(meth) acrylamide, N-tertbutyl (meth)acrylamide, N-phenyl(meth)acrylamide, and N-diphenylmethyl (meth)acrylamide.

$A_3$ is one or more repeat units from radically polymerizing an aromatic monomer of the structure

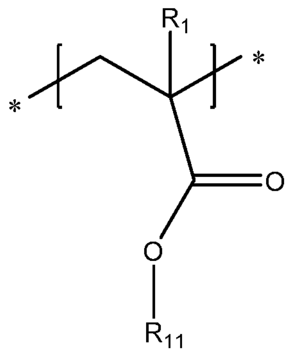

$A_3$

wherein $R_{11}$ is an $C_6$-$C_{12}$ aromatic or combination of aromatic and alkyl group optionally including hydroxyl group(s) and alkylene oxide group(s) substituted with an alkyl group for example an aromatic (meth)acrylate or mixtures of aromatic (meth)acrylates. Typical aromatic (meth) acrylates that can be used as co-monomer include, phenoxyethyl (meth)acrylate, ethylene glycol phenyl ether (meth)acrylate, 2-hydroxy-3-phenoxypropyl (meth)acrylate and benzyl (meth)acrylate. Preferably benzyl (meth)acrylate is the $A_3$ repeat unit.

$A_4$ is a repeat unit from radically polymerizing one or more aromatic vinyl monomer and would have the structure as shown below

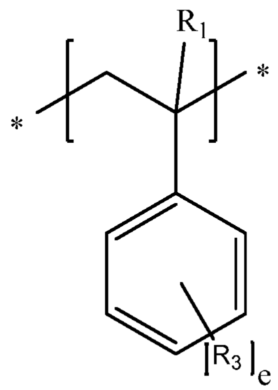

$A_4$

wherein $R_1$ is H or methyl and $R_3$ is one or more halogens, $C_1$-$C_{10}$ alkyl and/or aromatic group and preferably H or a $C_1$ to $C_4$ alkyl group, optionally including a halogen, one or more oxygen atom, and optionally including a nitrogen atom such as nitro group. The variable e can be 1, 2, 3, 4 or 5. In one embodiment, at least 80 mole% of the $R_3$ is preferably H. In one embodiment, desirably 10 mole% or less, more desirably 5 mole% or less, and preferably 2 mole% or less of A units can be repeat units from an aromatic vinyl monomer such as $A_4$.

$A_4$ can be a repeat unit from radically polymerizing styrene or substituted styrene for example from polymerizing 4-acetoxystyrene, 4-benzhydrylstyrene , 4-benzyloxy-3-methoxystyrene , 2-bromostyrene , 3-bromostyrene, 4-bromostyrene, 4-*tert*-butoxystyrene, 4-*tert*-butylstyrene, 2-chlorostyrene, 3-chlorostyrene, 4-chlorostyrene, 2,6-dichlorostyrene, 2,6-difluorostyrene, 3,4-dimethoxystyrene , 2,4-dimethylstyrene, 2,5-dimethylstyrene , *N,N*-dimethylvinylbenzylamine, 4-ethoxystyrene, 2-fluorostyrene, 3-fluorostyrene, 4-fluorostyrene, 4-[*N*-(methylaminoethyl)aminomethyl]styrene, 3-methylstyrene, 4-methylstyrene, 3-nitrostyrene, 2,3,4,5,6-pentafluorostyrene, 3-(trifluoromethyl)styrene, 4-(trifluoromethyl)styrene, 2,4,6-trimethylstyrene, 4-vinylanisole, 3-vinylbenzoic acid, 4-vinylbenzoic acid, 4-vinylbenzyl chloride, 4-vinylbiphenyl, 2-vinylnaphthalene.

$A_5$ is a repeat unit from radically polymerizing one or more polyester (meth)acrylate monomer of the formula

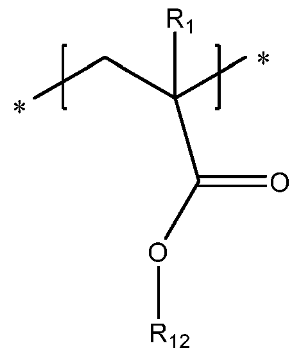

A5

wherein -O-$R_{12}$ is at least one polymer chain comprising of a polyester with a number average molecular weight of at least 200. More desirably the number average molecular weight of each polyester segment ($R_{12}$) on $A_5$ is in the number average molecular weight range of 300 to 5000, or 500 to 3000, or 1000 to 2500 dalton. An example of a monomer comprising a polyester chain is hydroxyethylcaprolactone acrylate (HELCA)

In one embodiment, the -O-$R_{12}$ portion of the $A_5$ repeat unit from radically polymerizing a monomer comprises of a polyester chain derived from polymerizing a lactone, dioxane-2,5-dione or a hydroxycarboxylic acid, or mixtures thereof. Examples of suitable lactones include β-propiolactone and optionally $C_{1-6}$-alkyl substituted δ-valerolactone and ε-caprolactone such as β-methyl-δ-valerolactone, δ-valerolactone, ε-caprolactone, 2-methyl-ε-caprolactone, 3-methyl-ε-caprolactone, 4-methyl-ε-caprolactone, 5-tert butyl-ε-caprolactone, 7-methyl-ε-caprolactone, 4,4,6-ε-caprolactone trimethyl-ε-caprolactone 4,6,6-trimethyl-ε-caprolactone, or mixtures thereof. Examples of suitable dioxane-2,5-diones include lactide or glycolide. In one embodiment, A is a monomer that contains at least one polyester chain derivable from δ-valerolactone and ε-caprolactone.

In another embodiment, the -O-$R_{12}$ portion of $A_5$ is derived from polymerizing hydroxy carboxylic acid that may be saturated or unsaturated, linear or branched. Examples of suitable hydroxy carboxylic acids are glycolic acid, lactic acid, 5-hydroxy valeric acid, 6-hydroxy caproic acid, ricinoleic acid, 12-hydroxy stearic acid, 12-hydroxydodecanoic acid, 5-hydroxydodecanoic acid, 5-hydroxydecanoic acid 4-hydroxydecanoic acid, or mixtures thereof.

The polyester made by condensation reactions may be esterification products prepared by the reaction of one or more organic polycarboxylic acids or their anhydrides (e.g., of molecular weight less than 300 and more preferably less than 150 dalton) with one or more low molecular weight (e.g., less than 250 and more desirably less than 150 dalton) diol. Examples of suitable polyols for use in the reaction include polyglycol adipates, polyethylene terephthalate polyols, orthophthalic polyols and the like, and mixtures thereof.

The diols used in making the polyester can be aliphatic, cycloaliphatic or aromatic and include alkylene glycols, e.g., ethylene glycol, 1,2- and 1,3-propylene glycols, 1,2-, 1,3-, 1,4- and 2,3-butylene glycols, hexane diols, neopentyl glycol, 1,6-hexanediol, 1,8-octanediol and other glycols such as bisphenol-A, cyclohexane diol, cyclohexane dimethanol (1,4-bis-hydroxymethylcycohexane), 2-methyl-1,3-propanediol, 2,2,4-trimethyl-1,3-pentanediol, 2-butyl-2-ethyl prorane-1,3-diol, Versatic™ alcohols produced from CARDURA E10P (Hexion), triethylene glycol, tetraethylene glycol, polyethylene glycol, dipropylene glycol, polypropylene glycol, dibutylene glycol, polybutylene glycol, caprolactone diol, dimerate diol, hydroxylated bisphenols, polyether glycols, halogenated diols, and the like, and mixtures thereof. Preferred diols include ethylene glycol, butylene glycol, hexane diol, and neopentyl glycol.

Suitable carboxylic acids used in making the polyester include dicarboxylic acids and tricarboxylic acids and anhydrides, e.g., maleic acid, maleic anhydride, succinic acid, glutaric acid, glutaric anhydride, adipic acid, suberic acid, pimelic acid, azelaic acid, sebacic acid, chlorendic acid, 1,2,4-butane-tricarboxylic acid, phthalic acid, the isomers of phthalic acid, phthalic anhydride, fumaric acid, tetrabromophthalic anhydride and acid, dimeric fatty acids such as oleic acid, and the like, and mixtures thereof. Preferred polycarboxylic acids used in making the polyester polyols include aliphatic or aromatic dibasic acids.

$A_6$ is a repeat unit from radically polymerizing a polyalkylene oxide (meth)acrylate (such as polyethylene glycol) (meth)acrylate) or a mixture of polyalkylene oxide (meth)acrylates of the formulae below

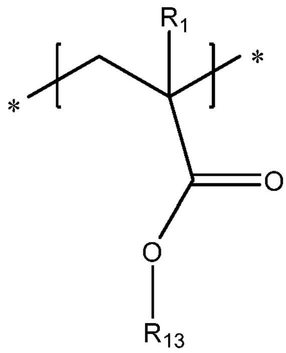

A6

wherein $R_1$ is selected from H or methyl and $R_{13}$ is a polyalkylene oxide, preferably having a number average molecular weight of 200-3000 dalton or polypropylene glycol) (meth)acrylate having number average molecular weight of 200 to 3000.

**Anchoring Block of the block copolymer dispersant**

B is a repeating unit from radically polymerizing a styrene monomer of 8 to 20 carbon atoms (optionally with heteroatoms or halogen(s)) and can have a structure such as shown below

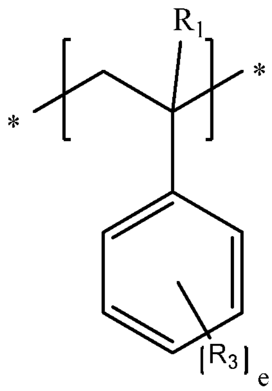

B

wherein $R_1$ is H or methyl and $R_3$ is one or more halogens or $C_1$-$C_{10}$ alkyl and/or aromatic group and preferably H or a $C_1$ to $C_4$ alkyl group, optionally including a halogen, one or more oxygen atom, and optionally including a nitrogen atom such as nitro group. The variable e can be 1, 2, 3, 4 or 5. In one embodiment, at least 80 mole% of the $R_3$ is preferably H.

B is a repeat unit from radically polymerizing styrene or substituted styrene. For example, from polymerizing 4-acetoxystyrene, 4-benzhydrylstyrene , 4-benzyloxy-3-methoxystyrene , 2-bromostyrene , 3-bromostyrene, 4-bromostyrene, 4-tert-butoxystyrene, 4-tert-butylstyrene, 2-chlorostyrene, 3-chlorostyrene, 4-chlorostyrene, 2,6-dichlorostyrene, 2,6-difluorostyrene, 3,4-dimethoxystyrene , 2,4-dimethylstyrene, 2,5-dimethylstyrene , *N,N*-dimethylvinylbenzylamine, 4-ethoxystyrene, 2-fluorostyrene, 3-fluorostyrene, 4-fluorostyrene, 4-[*N*-(methylaminoethyl)aminomethyl]styrene, 3-methylstyrene, 4-methylstyrene, 3-nitrostyrene, 2,3,4,5,6-pentafluorostyrene, 3-(trifluoromethyl)styrene, 4-(trifluoromethyl)styrene, 2,4,6-trimethylstyrene, 4-vinylanisole, 3-vinylbenzoic acid, 4-vinylbenzoic acid, 4-vinylbenzyl chloride, 4-vinylbiphenyl, 2-vinylnaphthalene.

$D_1$ + $D_2$ +$D_3$ + $D_4$ units = 100 mole% of D, where at least 50 mole% of D = $D_3$ + $D_4$, preferably the mole% of $D_4$ is greater than $D_3$ such that greater than 60, 70, 80, 90 mole% of D = $D_4$. D' is an example of a repeat unit from maleic anhydride monomer reacted with an aminic dialkylaminoalkylamine, a substituted dialkylaminoalkylamine, or an aminoalkyl substituted nitrogen containing aromatic heterocycle or mixtures thereof desirably having 4 to 6 carbon atoms, preferably $D'_3$ (amide form) or $D'_4$ (imide form) repeat units. D" is an example of a repeat unit from an itaconic acid monomer reacted with an aminic dialkylaminoalkylamine, a substituted dialkylaminoalkylamine, or an aminoalkyl substituted nitrogen containing aromatic heterocycle or mixtures thereof desirably having 4 to 6 carbon atoms, preferably $D''_3$ (amide form) or $D''_4$ (imide form) repeat units.

Examples of a dialkylaminoalkylamine include dimethylaminoethylamine, diethylaminopropylamine, or dimethylaminopropylamine . Examples of a suitable imidazole include 1-(3-aminopropyl)imidazole, 1-(3-aminobutyl)imidazole, 1-(3-aminopentyl)imidazole, 1-(3-aminohexyl)imidazole, 1-(3-aminoheptyl)imidazole, 1-(3-aminooctyl)imidazole, or mixtures thereof. Examples of suitable amino alkyl pyridines include 2-(2-aminoethyl)pyridine, 3-(2-aminoethyl)pyridine, 4-(2-aminoethyl)pyridine. Examples of pyridines include 2-(2-pyridyl)ethylamine, 4-(2-aminoethyl)pyridine, 4-(1-aminoethyl)pyridine, 3-(2-aminoethyl)pyridine, 2-(1-aminoethyl)pyridine, and 1-pyridin-3-yl-ethylamine, 2-(2-methylaminoethyl)pyridine, 4-(aminomethyl)pyridine, 2-amino-4-methylpyridine, 2-amino-6-methylpyridine, 2-amino-3-methylpyridine, 2-amino-3-methylpyridine, 4-amino-2-methylpyridine, 5-amino-2-methylpyridine, 3-amino-4-methylpyridine, 3-amino-5-methylpyridine, and 2-(6-methylpyridin-2-yl)ethylamine.

In addition, to a dialkylaminoalkylamine or aminoalkyl substituted nitrogen containing aromatic heterocycle a non-tertiary nitrogen containing amine may be present. Examples of amines; that can be reacted with the dicarboxylic acid of the anchoring chain in lieu of the amines with tertiary nitrogen, aromatic nitrogen, heterocycle nitrogen, or imidazole; include alkyl amines with $C_1$-$C_{20}$ carbon atoms for example methyl, propyl, butyl, pentyl, hexyl amine or aromatic amines for example phenyl amine and phenyl ethyl amine. Desirably, less than 30 mole%, more desirably less than 20 mole%, preferably less than 10 or in some embodiments less than 5 or 1 mole percent of the total D units of the block copolymer dispersant that have amide or imide linkages to the aminic reactant would comprise amines that do not have a tertiary amine, an aromatic amine with a nitrogen in the aromatic ring, or an imidazole. The complementary amount (to make 100%) of the D units would be the dicarboxylic acid repeat units, the anhydride of the D unit, or the amide and imide form of the D units.

$D'_3$ (amide form), and $D'_4$ (imide form) or $D''_3$ (amide form), and $D''_4$ (imide form) are examples of how repeat units from dicarboxylic acid monomer, $D'_1$ (maleic anhydride) or $D''_1$ (itaconic acid) react with amines. Preferably D, or examples $D'_1$ or $D''_1$ are optionally reacted with an aminic reactant that contains at least 2 and maybe up to 3 or 4 nitrogen (amines) at least one of which is not reactive with carboxylic acid groups such as 1) tertiary amines or 2) amines where the nitrogen atom is part of a cyclic or heterocyclic ring, or 3) amines where the nitrogen is part of an aromatic ring or is bound to one carbon atom by a single bond and another carbon atom by a double bond (aromatic rings with amine therein and imidazoles). Tertiary amines are amines where the nitrogen is attached to at least three different aliphatic carbon atom groups. The aminic reactant has at least 2 and up to 10, more desirably at least 2 and up to 6 or 8, and preferably at least 2 and up to 4 nitrogen atoms. The aminic reactant has 4 to 30 carbon atoms, more desirably 4 to 20 carbon atoms and preferably 4 to 10 or 15 carbon atoms (optionally including one or two oxygen atoms). The aminic reactant reacts to the dicarboxylic acid or anhydride through a primary or secondary amine to form an amide or imide linkage as shown in $D'_3$ and $D''_3$ (amide form) or $D'_4$ and $D''_5$ (imide form).

In one embodiment, up to 10 or 20 mole% of the aminic reactant can have multiple primary or secondary amine groups such that it can couple two different block copolymer dispersants into a larger dispersant. In another embodiment, less than 10 mole% or less than 5 mole% or less than 2 mole% of the aminic reactant can have more than one amine group capable of forming an amide or imide bond with a dicarboxylic acid or anhydride thereof. The following structures show some of the potential derivatives of the aminic reactant and either maleic anhydride derived repeat units or itaconic acid derived repeat units in the block copolymer dispersant. In one embodiment, at least 80 mole% of the D units are reacted with an aminic reactant to form an amide or imide that contains a tertiary amine. In one embodiment, at least 80 mole% of the D units are reacted with an aminic reactant to form an amide or imide that contains an amine where the nitrogen is part of an aromatic ring or part of an imidazole ring. In one embodiment, at least 80 mole% of the D units are reacted with an aminic reactant to form an amide or imide that contains at least one of the group consisting of a tertiary amine, a nitrogen as part of an imidazole, and a nitrogen as part of an aromatic ring.

$D'_1$ anhydride

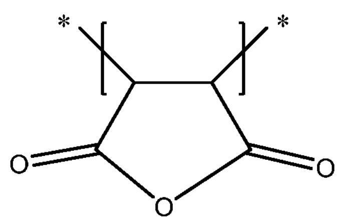

$D'_2$ dicarboxylic

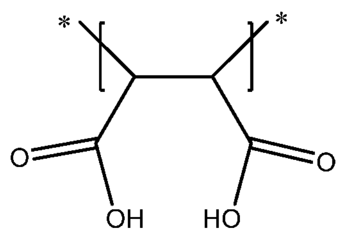

D'3 amide

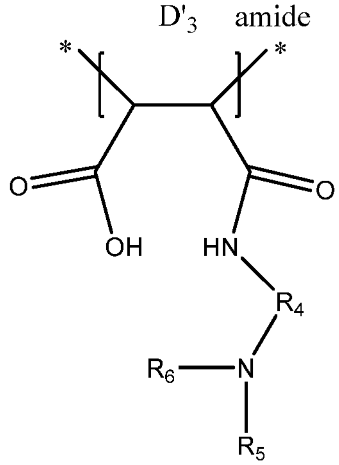

D'4 imide

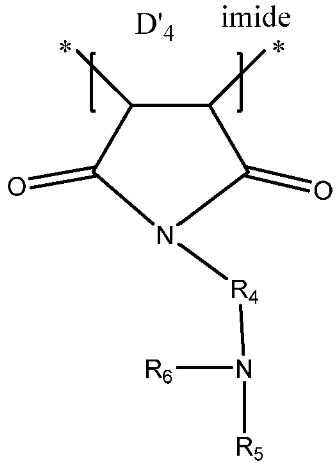

D"1 anhydride

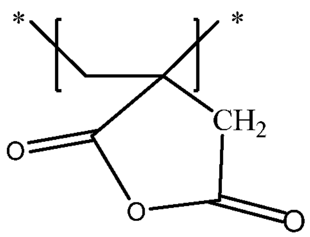

D"2 dicarboxylic

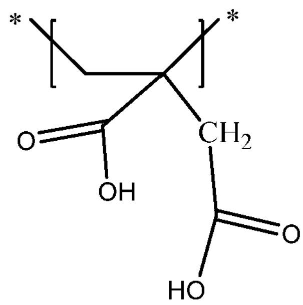

D"3 amide

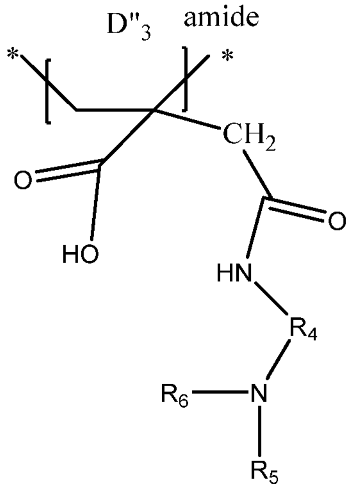

D"4 imide

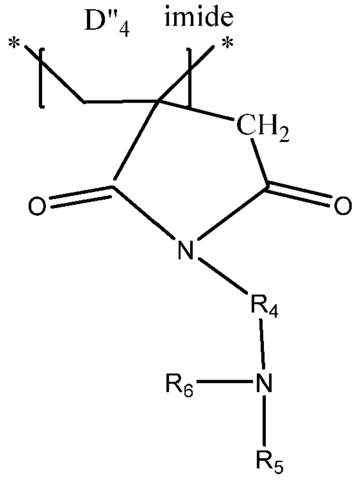

In addition to a dialkylaminoalkylamine or aminoalkyl substituted nitrogen containing aromatic heterocycle, a polyamine may be present such that 1-10% of the dicarboxylic groups are reacted and it is anticipated that these will induce some intermolecular crosslinking. Examples of poly(amines) are ethylenediamine, diethylene triamine. Polyamines may contain secondary or tertiary amines for example tetraethylene pentamine or trimethyldiethylenetriamine.

The compound containing at least one tertiary or heterocyclic amine may be a dialkylaminoalkylamine, a substituted dialkylaminoalkylamine, an aminoalkyl substituted nitrogen containing aromatic heterocycle, a dialkylaminoalkyl alcohol, a hydroxyalkyl substituted nitrogen containing aromatic heterocycle, or mixtures thereof.

In one embodiment, the compound containing at least one tertiary or heterocyclic amine may be a dialkylaminoalkylamine, a substituted dialkylaminoalkylamine, or mixtures thereof.

The dialkylaminoalkylamine may be represented by the formula $R^2(R^3)NR^4NH_2$ wherein $R_2$ and $R_3$ are inde-

pendently $C_1$-$C_6$ alkyl moieties. $R_2$ and $R_3$ may be taken together to form a cyclic structure containing 5 to 8 carbon atoms. $R^4$ includes $C_1$ to $C_{12}$ linear or branched alkylene.

Examples of a dialkylaminoalkylamine include dimethylaminoethylamine, diethylaminopropylamine, or dimethylaminopropylamine.

The substituted dialkylaminoalkylamine may be represented by the formula $R^2(R^3)NR^4NHR^5$, wherein $R^2$, $R^3$ and $R^4$ are defined above, and $R^5$ is H or an optionally substituted linear or branched hydrocarbyl group.

The dialkanolaminoalkyl amine may be represented by the formula HO-$R^2$(HO-$R^3$)$NR^4NHR^5$, wherein $R^2$, $R^3$ and $R^4$ are defined previously. Examples of suitable dialkanolaminoalkyl amine includes N,N-bis(2-hydroxyethyl)ethylenediamine and [2-aminoethyl(hydroxymethyl)amino]methanol.

The aminoalkyl substituted nitrogen containing aromatic, heterocycle, or imidazole may include groups such as an imidazole, a pyridine a triazole, a pyrazole, a tetrazole, or mixtures thereof. In one embodiment, aminoalkyl substituted nitrogen containing aromatic heterocycle includes an imidazole, optionally substituted with $C_{1-4}$ groups. Examples of a suitable imidazole include 1-(3-aminopropyl)imidazole, 1-(3-aminobutyl)imidazole, 1-(3-aminopentyl)imidazole, 1-(3-aminohexyl)imidazole, 1-(3-aminoheptyl)imidazole, 1-(3-aminooctyl)imidazole, or mixtures thereof. In one embodiment, aminoalkyl substituted nitrogen is an imidazole. Examples of a suitable imidazole include examples include 2-aminoimidazole, 2-aminobenzimidazole, 1-(3-aminopropyl)imidazole, 1-(3-aminopropyl)-2-methyl-1*H*-imidazole, 2-(1*H*-imidazol-1-yl)ethanamine, 2-(2-methyl-1*H*-imidazol-1-yl)ethylamine, or mixtures thereof. Another aminic reactant can include *N*-phenyl-p-phenylenediamine.

The tertiary amine group of the dialkylaminoalkylamine, or the other nitrogen(s) attached with three covalent bonds to non-carbonyl carbon atoms (e.g., the imidazole, the aromatic amines, or the heteroatom cyclic structures) may be quaternised. Quaternising agents include alkyl halides, aralkyl halides, dialkyl carbonates, dialkyl sulphates or epoxides. Particularly useful quaternising agents for the graft copolymer of Formula (1) include benzyl chloride, dimethyl sulphate, diethyl sulphate propylene oxide, or styrene oxide. Often epoxides are used in the presence of equal molar quantity of acid (such as acetic acid).

The degree of quaternising may be from greater than 1%, or greater than 10%, or greater than 20% and or 40% or more of the amine moieties. The degree of quaternising may be as high as 100%, or 95% or 90% of the amine moieties. In different embodiments, the degree of quaternising ranges from greater than 1% to 100%, or greater than 10% to 95%, or greater than 20% to 95%, or 40% to 90%.

The dispersant of the invention may be obtained by a process comprising 1) synthesis of a block copolymer and 2) reaction of block copolymer with dialkylaminoalkylamine, a substituted dialkylaminoalkylamine, an aminoalkyl substituted nitrogen containing aromatic, heterocycle, or imidazole. Alternatively, the styrene maleic anhydride copolymer could be generated, the maleic anhydride based repeating unit could be functionalized with the aminic reactant, and then one or more solubilizing blocks could be added to the styrene-maleic anhydride block.

The block copolymer may be synthesised from any living or controlled polymerization technique especially control radical polymerisation (CRP) processes. e.g., cobalt catalysed chain transfer polymerisation, nitroxide mediated polymerisation, atom transfer radical polymerisation, iodine transfer polymerisation, selenium-centered radical-mediated polymerisation, telluride mediated polymerisation, stilbene-mediated polymerisation, organocatalyzed living radical polymerisation, and preferably reversible addition fragmentation chain transfer (RAFT) polymerisation. The process may be carried out in an inert atmosphere or air. If the polymerisation is performed in an inert atmosphere, nitrogen or argon are preferred.

The process is typically performed in the presence of solvent. A suitable solvent may be chosen from aromatic hydrocarbons, such as toluene and xylene, aliphatic hydrocarbons, alkyl esters of alkane carboxylic acids, dialkyl ketones and dialkyl and cyclic ethers such as diethyl ether and tetrahydrofuran. Examples of suitable solvents include alkyl esters such as methyl acetate, ethyl acetate, isopropyl acetate, butyl acetate, ethyl formate, methyl propionate, methoxy propyl acetate, ethyl butyrate, or mixtures thereof.

The process to prepare the polymer of the invention may have a reaction temperature in the range -80 to 250° C, or 20 to 220° C or 40 to 200° C. The choice of solvent and initiator will may or may not have a limiting or non-limiting effect on the preferred polymerisation temperature range.

An organocatalysed living radical polymerization (OLRP) process performed in ester solvent is preferred. OLRP polymerization are carried typically performed utilizing an alkyl iodide initiator in the presence of an organic catalyst as described in US 2012/190795, US 8,575,285B2, US 9,018,325B2 and US 8,742,045B2. Examples of initiators for OLRP are ethyl $\alpha$-iodophenylacetate, 2-iodo-2-methylpropionitrile, ethyl 2-iodo-2-methylpropionate, ethyl 2-iodopropionate. The initiator may be synthesised in situ by reacting iodine with a free radical initiator for example 2,2'-azobis(2,4-dimethylvaleronitrile) (V65) or 2,2'-azobis(isobutyronitrile) (V60). Examples of catalysts for OLRP are tributyl amine, tetra butyl ammonium iodide, N-iodosuccinimide, diethyl phosphonate, diphenylmethane, 2,6-Di-tert-butyl-4-methylphenol and Vitamin E compounds.

A RAFT polymerisation process performed in an ester solvent is especially preferred. RAFT polymerisations are carried out utilising thiocarbonylthio chain transfer agents, e.g., cyanomethyl methyl(phenyl)carbamodithioate, cyanomethyl dodecyl trithiocarbonate, 2-cyano-2-propyl benzodithioate, 4-cyano-4-(phenylcarbonothioylthio)pentanoic acid, 2-cyano-2-propyl dodecyl trithiocarbonate, 4-cyano-4-[(dodecylsulfanylthiocarbonyl)sulfanyl]pentanoic acid, or 2-(dodecylthiocarbonothioylthio)-2-methylpropionic acid.

It is preferable to use a free radical initiator in the presence of RAFT agent or OLRP catalyst to accelerate the polymerization. The initiator may be an oil soluble azo or peroxide type initiator. Examples of Azo initiators and related Wako product codes are dimethyl 2,2'-azobis(2-methylpropionate) (V601), 2,2'-azobis(2,4-dimethylvaleronitrile) (V65), 2,2'-azobis(isobutyronitrile) (V60), 2,2'-azobis(4-methoxy-2,4-dimethylvaleronitrile) (V70), 2,2'-azobis(2-methylbutyronitrile) (V59), or 1,1'-azobis(cyclohexanecarbonitrile) (V40). Examples of peroxide initiators are dilauroyl peroxide, dibenzoyl peroxide, t-butyl perbenzoate, t-butyl peroxyacetate, t-butyl peroxy-2-ethylhexanoate (Trigonox® 21S ex Akzo Nobel).

If a diblock copolymer is desired, the living polymerization is conducted sequentially (in any order of solubilizing and anchoring) once with the solubilizing monomer(s) and one with the anchoring monomers. If a tetrablock copolymer dispersant is desired, the living polymerization is conducted sequentially four times. As the polymerization can switch from solubilizing monomer(s) to anchoring monomers or vice versa, the order of polymerization of the monomers is not critical.

In a typical RAFT or OLRP process, monomer component forming A (e.g., alkyl (meth)acrylate), free radical initiator and RAFT agent or OLRP initiator and catalyst are stirred in solvent under nitrogen at 60-100° C for 2-24 hours until all the monomer has converted to polymer. In one embodiment, it is desirable that monomer conversion of component A is greater than 95% to enhance blocking efficiency. Monomer components B and D are then charged and stirred under nitrogen for 60-100° C for 2-24 hours until all the monomer has converted to polymer. Additional initiators may be added at any time to increase reaction rate.

After the desired number of blocks of each segment are generated, the final polymer can be stirred under nitrogen with an aminic reactant comprising a dialkylaminoalkylamine, a substituted dialkylaminoalkylamine, or an aminoalkyl substituted nitrogen containing aromatic heterocycle, or imidazole at temperatures from 0-300° C, preferably 25 to 200° C and especially 80-180° C. A reaction temperature of less than 100° C will typically favour formation of amides. Whereas, a reaction temperature of 150° C or greater will typically favour formation of imides if the amine reactant is a primary amine. The resultant copolymer may contain a mixture amide or imide groups and smaller amounts of dicarboxylic acid and or anhydride.

On addition of the amine component, the RAFT agent may be cleaved from the polymer chain end. The resulting product may remain in the reaction solvent or be removed by a separation technique. An example of removing the cleaved RAFT agent from the polymer solution may be to filter through an ion exchange resin/activated carbon or separate the polymer from solution by precipitation.

The process of adding the aminic reactant and forming the amide or imide (or combinations thereof) is typically performed in the same solvent as the polymerisation reaction but may be performed in a different solvent. Suitable solvent may be chosen from aromatic hydrocarbons, such as toluene and xylene, aliphatic hydrocarbons, alkyl esters of alkane carboxylic acids, dialkyl ketones and dialkyl and cyclic ethers such as diethyl ether and tetrahydrofuran. Examples of suitable solvents include alkyl esters such as methyl acetate, ethyl acetate, isopropyl acetate, butyl acetate, ethyl formate, methyl propionate, methoxy propyl acetate, ethyl butyrate, or mixtures thereof.

After the aminic reactant has been reacted onto the block copolymer, any quaternization of tertiary or other nitrogen atoms bound to aliphatic or aromatic carbons by three covalent bonds can be implemented. The reaction conditions for quaternization are well known to those skilled in the art.

The RAFT agent may be removed before the addition of the dialkylaminoalkylamine, substituted dialkylaminoalkylamine, or aminoalkyl substituted nitrogen containing aromatic heterocycle. Examples of processes for removal of the RAFT agent are described in Polym. Chem., 2010, 1, 149-157.

The polymeric dispersant is useful to disperse particulate matter in a polar or non-polar organic media.

The particulate solid present in the composition may be any inorganic or organic solid material which is substantially insoluble in the organic medium at the temperature concerned and which it is desired to stabilize in a finely divided form therein. The particulate solids may be in the form of a granular material, a fiber, a platelet or in the form of a powder, often a blown powder. In one embodiment, the particulate solid is a pigment.

The particulate solid (typically a pigment or filler) may have an average particle size measured by light scattering measurements of from 10 nanometers to 10 microns, or desirably 10 nanometers to 1, 2, 3 or 5 microns, or more desirably 20 nanometers to 1, 2, 3 or 5 microns in diameter.

Examples of suitable solids are pigments for solvent inks; pigments, extenders, fillers, blowing agents and flame retardants for paints and plastic materials; dyes, especially disperse dyes; optical brightening agents and textile auxiliaries for solvent dyebaths; pigments for inks, toners and other solvent application systems; solids for oil-based and inverse-emulsion drilling muds; dirt and solid particles in dry cleaning fluids; metals; particulate ceramic materials and magnetic materials for ceramics, piezoceramic printing, refractories, abrasives, foundry, capacitors, fuel cells, ferrofluids, conductive inks, magnetic recording media, water treatment and hydrocarbon soil remediation; organic and inorganic

nanodisperse solids; metal, metal oxides and carbon for electrodes in batteries, fibers such as wood, paper, glass, steel, carbon and boron for composite materials; and biocides, agrochemicals and pharmaceuticals which are applied as dispersions in organic media.

In one embodiment, the solid is an organic pigment from any of the recognized classes of pigments described, for example, in the Third Edition of the Colour Index (1971) and subsequent revisions of, and supplements thereto, under the chapter headed "Pigments." Examples of organic pigments are those from the azo, disazo, trisazo, condensed azo, azo lakes, naphthol pigments, anthanthrone, anthrapyrimidine, anthraquinone, benzimidazolone, carbazole, diketopyrrolopyrrole, flavanthrone, indigoid pigments, indanthrone, isodibenzanthrone, isoindanthrone, isoindolinone, isoindoline, isoviolanthrone, metal complex pigments, oxazine, perylene, perinone, pyranthrone, pyrazoloquinazolone, quinacridone, quinophthalone, thioindigo, triarylcarbonium pigments, triphendioxazine, xanthene and phthalocyanine series, especially copper and/or zinc phthalocyanine and its nuclear halogenated derivatives, and also lakes of acid, basic and mordant dyes. Carbon black, although strictly inorganic, behaves more like an organic pigment in its dispersing properties. In one embodiment, the organic pigments are phthalocyanines, especially copper phthalocyanines, monoazos, disazos, indanthrones, anthranthrones, quinacridones, diketopyrrolopyrroles, perylenes and carbon blacks.

Examples of inorganic pigments include metallic oxides such as titanium dioxide, rutile titanium dioxide and surface coated titanium dioxide, titanium oxides of different colours such as yellow and black, iron oxides of different colours such as yellow, red, brown and black, zinc oxide, zirconium oxides, aluminium oxide, oxymetallic compounds such as bismuth vanadate, cobalt aluminate, cobalt stannate, cobalt zincate, zinc chromate and mixed metal oxides of two or more of manganese, nickel, titanium, chromium, antimony, magnesium, cobalt, iron or aluminium, Prussian blue, vermillion, ultramarine, zinc phosphate, zinc sulphide, molybdates and chromates of calcium and zinc, metal effect pigments such as aluminium flake, copper, and copper/zinc alloy, pearlescent flake such as lead carbonate and bismuth oxychloride.

Inorganic solids include extenders and fillers such as ground and precipitated calcium carbonate, calcium sulphate, calcium oxide, calcium oxalate, calcium phosphate, calcium phosphonate, barium sulphate, barium carbonate, magnesium oxide, magnesium hydroxide, natural magnesium hydroxide or brucite, precipitated magnesium hydroxide, magnesium carbonate, dolomite, aluminium trihydroxide, aluminium hydroperoxide or boehmite, calcium and magnesium silicates, aluminosilicates including nanoclays, kaolin, montmorillonites including bentonites, hectorites and saponites, ball clays including natural, synthetic and expandable, mica, talc including muscovites, phlogopites, lepidolites and chlorites, chalk, synthetic and precipitated silica, fumed silica, metal fibers and powders, zinc, aluminium, glass fibers, refractory fibers, carbon black including single and multi-walled carbon nanotubes, reinforcing and non-reinforcing carbon black, graphite, Buckminsterfullerenes, asphaltene, graphene, diamond, alumina, quartz, perlite, pegmatite, silica gel, wood flour, wood flake including soft and hard woods, saw dust, powdered paper/fiber, cellulosic fibers such as kenaf, hemp, sisal, flax, cotton, cotton linters, jute, ramie, rice husk or hulls, raffia, typha reed, coconut fiber, coir, oil palm fiber, kapok, banana leaf, caro, curaua, henequen leaf, harakeke leaf, abaca, sugar cane bagasse, straw, bamboo strips, wheat flour, MDF and the like, vermiculite, zeolites, hydrotalcites, fly ash from power plants, incinerated sewage sludge ash, pozzolanes, blast furnace slag, asbestos, chrysotile, anthophylite, crocidolite, wollastonite, attapulgite and the like, particulate ceramic materials such as alumina, zirconia, titania, ceria, silicon nitride, aluminium nitride, boron nitride, silicon carbide, boron carbide, mixed silicon-aluminium nitrides and metal titanates; particulate magnetic materials such as the magnetic oxides of transition metals, often iron and chromium, e.g., gamma-$Fe_2O_3$, $Fe_3O_4$ and cobalt-doped iron oxides, ferrites, e.g., barium ferrites; and metal particles, for instance metallic aluminium, iron, nickel, cobalt, copper, silver, gold, palladium, and platinum and alloys thereof.

Other useful solid materials include flame retardants such as pentabromodiphenyl ether, octabromodiphenyl ether, decabromodiphenyl ether, hexabromocyclododecane, ammonium polyphosphate, melamine, melamine cyanurate, antimony oxide and borates; biocides or industrial microbial agents such as those mentioned in tables 2, 3, 4, 5, 6, 7, 8 and 9 of the chapter entitled "Industrial Microbial Agents" in Kirk-Othmer's Encyclopedia of Chemical Technology, Vol. 13, 1981, 3rd Ed., and agrochemicals such as the fungicides flutriafen, carbendazim, chlorothalonil and mancozeb.

The continuous medium in this disclosure can be a polar organic solvent, a non-polar organic solvent, or a polymer or compatible blends of polymers and/or solvents (wherein compatible is used to indicate a one-phase system under the intended conditions of temperature, pressure, etc.). The organic medium present in the composition of the invention in one embodiment is a plastics material and in another embodiment is an organic liquid. The organic liquid may be a non-polar or a polar organic liquid. By the term "polar," in relation to the organic liquid, it is meant that an organic liquid is capable of forming moderate to strong bonds as described in the article entitled "A Three-Dimensional Approach to Solubility" by Crowley, et al in Journal of Paint Technology, Vol. 38, 1966, at pg. 269. Such organic liquids generally have a hydrogen bonding number of 5 or more as defined in the above-mentioned article.

Examples of suitable polar organic liquids are amines, ethers, especially lower alkyl ethers, organic acids, esters, ketones, glycols, glycol ethers, glycol esters, alcohols and amides. Numerous specific examples of such moderately strongly hydrogen bonding liquids are given in the book entitled "Compatibility and Solubility" by Ibert Mellan (published in 1968 by Noyes Development Corporation) in Table 2.14 on pages 39-40 and these liquids all fall within

the scope of the term polar organic liquid as used herein.

In one embodiment, polar organic liquids are dialkyl ketones, alkyl esters of alkane carboxylic acids and alkanols, especially such liquids containing up to, and including, a total of 6 carbon atoms. As examples of the polar organic liquids include dialkyl and cycloalkyl ketones, such as acetone, methyl ethyl ketone, diethyl ketone, di-isopropyl ketone, methyl isobutyl ketone, di-isobutyl ketone, methyl isoamyl ketone, methyl n-amyl ketone and cyclohexanone; alkyl esters such as methyl acetate, ethyl acetate, isopropyl acetate, butyl acetate, ethyl formate, methyl propionate, methoxypropyl acetate and ethyl butyrate; glycols and glycol esters and ethers, such as ethylene glycol, 2-ethoxyethanol, 3-methoxypropylpropanol, 3-ethoxypropylpropanol, 2-butoxyethyl acetate, 3-methoxypropyl acetate, 3-ethoxypropyl acetate and 2-ethoxyethyl acetate; alkanols such as methanol, ethanol, n-propanol, isopropanol, n-butanol and isobutanol (also known as 2-methylpropanol), terpineol and dialkyl and cyclic ethers such as diethyl ether and tetrahydrofuran. In one embodiment, solvents are alkanols, alkane carboxylic acids and esters of alkane carboxylic acids. In one embodiment, the present invention is suitable for organic liquids that are substantially non-soluble in an aqueous medium. Furthermore, a person skilled in the art will appreciate that small quantities of an aqueous medium (such as glycols, glycol ethers, glycol esters and alcohols) may be present in the organic liquids provided the overall organic liquid is substantially non-soluble in an aqueous medium.

Examples of organic liquids, which may be used as polar organic liquids are thermoplastic extrudable or moldable plastics and film-forming resins such as are suitable for the preparation of inks, paints and chips for use in various applications such as paints and inks. Examples of such resins include polyamides, such as Versamid™ and Wolfamid™, and cellulose ethers, such as ethyl cellulose and ethyl hydroxyethyl cellulose, nitrocellulose and cellulose acetate butyrate resins, including mixtures thereof. Examples of paint resins include short oil alkyd/melamine-formaldehyde, polyester/melamine-formaldehyde, thermosetting acrylic/melamine-formaldehyde, long oil alkyd, medium oil alkyd, short oil alkyd, polyether polyols and multi-media resins such as acrylic and urea/aldehyde.

The organic liquid may be a polyol, that is to say, an organic liquid with two or more hydroxy groups. In one embodiment, polyols include alpha-omega diols or alpha-omega diol ethoxylates.

In one embodiment, non-polar organic liquids are compounds containing aliphatic groups, aromatic groups or mixtures thereof. The non-polar organic liquids include non-halogenated aromatic hydrocarbons (e.g., toluene and xylene), halogenated aromatic hydrocarbons (e.g., chlorobenzene, dichlorobenzene, chlorotoluene), non-halogenated aliphatic hydrocarbons (e.g., linear and branched aliphatic hydrocarbons containing six or more carbon atoms both fully and partially saturated), halogenated aliphatic hydrocarbons (e.g., dichloromethane, carbon tetrachloride, chloroform, trichloroethane) and natural non-polar organics (e.g., vegetable oil, sunflower oil, rapeseed oil, linseed oil, terpenes and glycerides).

In one embodiment, the organic liquid comprises at least 0.1% by weight, or 1% by weight or more of a polar organic liquid based on the total organic liquid. The organic liquid optionally further comprises water in amounts 10 wt.% or less, 5 wt.% or less or 2 wt.% or less in a polar organic media and water in amounts of 5 wt.% or less, 2 wt.% or less, or 1 wt.% or less in non-polar organic media based on the weight of the media. In one embodiment, the continuous media is substantially free of water meaning it is less than 500 ppm, 200 ppm or 100 ppm based on the weight of the media. In another embodiment, the limitation with respect to the wt.% or ppm of water will be based on the weight of the dispersion, which generally describes the millbase, coating or ink and comprises dispersed particulate, dispersant, and the polar or non-polar media, and optional additives such as resins, viscosity modifiers, defoamers, etc.

If desired, the compositions of the present invention may contain other ingredients, for example resins (where these do not already constitute the organic medium), binders, co-solvents, cross-linking agents, fluidising agents, wetting agents, anti-sedimentation agents, plasticisers, surfactants, dispersants other than the compound of the present invention, humectants, anti-foamers, anti-cratering agents, rheology modifiers, heat stabilizers, light stabilizers, UV absorbers, antioxidants, leveling agents, gloss modifiers, biocides and preservatives.

If desired, the compositions containing plastic material may contain other ingredients, for example dispersants other than the compound of the present invention, antifogging agents, nucleators, blowing agents, flame retardants, process aids, surfactants, plasticisers, heat stabilizers, UV absorbers, anti-oxidants, fragrances, mould release aids, anti-static agents, antimicrobial agents, biocides, coupling agents, lubricants (external and internal), impact modifiers, slip agents, air release agents and viscosity depressants.

The compositions typically contain from 1 to 95% by weight of the particulate solid (dispersed phase), the precise quantity depending on the nature of the solid and the quantity depending on the nature of the solid and the relative densities of the continuous media. For example, a composition in which the solid is an organic material, such as an organic pigment, in one embodiment contains from 15 to 60% by weight of the solid whereas a composition in which the solid is an inorganic material, such as an inorganic pigment, filler or extender, in one embodiment contains from 40 to 90% by weight of the solid based on the total weight of composition.

The compositions containing an organic liquid may be prepared by any of the conventional methods known for preparing dispersions. Thus, the solid, the organic medium and the dispersant may be mixed in any order, the mixture then being subjected to a mechanical treatment to reduce the particles of the solid to an appropriate size, for example

by high speed mixing, ball milling, basket milling, bead milling, gravel milling, sand grinding, attritor grinding, two or three roll milling, plastic milling until the dispersion is formed. Alternatively, the solid may be treated to reduce its particle size independently or in admixture with either the organic medium or the dispersant, the other ingredient or ingredients then being added and the mixture being agitated to provide the composition. The composition can also be made by grinding or milling the dry solid with the dispersant and then adding the liquid medium or mixing the solid with the dispersant in a liquid medium in a pigment flushing process.

The composition containing the plastic material may be prepared by any of the conventional methods known for preparing thermoplastic compounds. Thus, the solid, the thermoplastic polymer, and the dispersant may be mixed in any order, the mixture then being subjected to a mechanical treatment to reduce the particles of the solid or disperse them in an appropriate size, for example, by Banbury mixing, ribbon blending, twin-screw extrusion, twin-roll milling, compounding in a Buss co-kneader, or similar equipment. Master batches of the pigments in the particular plastic or rubber can also be made and that master batch can then be diluted with addition plastic or rubber to make the final composition.

The composition of the present invention is particularly suited to liquid dispersions. In one embodiment, such dispersion compositions comprise:

a) from 0.5 to 80 parts of a particulate solid;
b) from 0.1 to 79.6 parts of the polymeric dispersant; and
c) from 19.9 to 99.4 parts of an organic liquid

wherein all relative parts are by weight and the amounts (a) +(b) +(c) = 100.

In one embodiment, component a) comprises from 0.5 to 30 parts of a pigment and such dispersions are useful as (liquid) inks, paints and millbases.

If a composition is required comprising a particulate solid and the polymeric dispersant in dry form, the organic liquid is typically volatile so that it may be readily removed from the particulate solid by a simple separation means such as evaporation. In one embodiment, the composition comprises the organic liquid.

If the dry composition consists essentially of the polymeric dispersant and the particulate solid, it typically contains at least 0.2%, at least 0.5% or at least 1.0% of polymeric dispersant based on weight of the particulate solid. In one embodiment, the dry composition contains not greater than 100%, not greater than 50%, not greater than 20% or not greater than 10% by weight of the polymeric dispersants based on the weight of the particulate solid.

As disclosed herein, the compositions of the invention are suitable for preparing millbases wherein the particulate solid is milled in an organic liquid in the presence of said polymeric dispersant.

Thus, according to a still further aspect of the invention, there is provided a millbase comprising a particulate solid, an organic liquid and the polymeric dispersant.

Typically, the millbase contains from 20 to 70% by weight particulate solid based on the total weight of the millbase. In one embodiment, the particulate solid is not less than 10 or not less than 20% by weight of the millbase. Such millbases may optionally contain a binder added either before or after milling.

In one embodiment, the binder is a polymeric material capable of binding the composition on volatilization of the organic liquid.

Binders are polymeric materials including natural and synthetic materials. In one embodiment, binders include poly(meth)acrylates, polystyrenics, polyesters, polyurethanes, alkyds, polysaccharides such as cellulose, nitrocellulose, and natural proteins such as casein. The binder may be nitrocellulose. In one embodiment, the binder is present in the composition at more than 100% based on the amount of particulate solid, more than 200%, more than 300% or more than 400%.

The amount of optional binder in the millbase can vary over wide limits but is typically not less than 10%, and often not less than 20% by weight of the continuous/liquid phase of the millbase. In one embodiment, the amount of binder is not greater than 50% or not greater than 40% by weight of the continuous/liquid phase of the millbase.

The amount of dispersant in the millbase is dependent on the amount of particulate solid but is typically from 0.5 to 5% by weight of the millbase.

Dispersions and millbases made from the composition of the invention are particularly suitable for use in non-aqueous and solvent free formulations in which energy curable systems (ultra-violet, laser light, infra-red, cationic, electron beam, microwave) are employed with monomers, oligomers, etc. or a combination present in the formulation. They are particularly suitable for use in coatings such as paints, varnishes, inks, other coating materials and plastics. Suitable examples include their use in low, medium and high solids paints, general industrial paints including baking, two component and metal coating paints such as coil and can coatings, powder coatings, UV-curable coatings, wood varnishes; inks, such as flexographic, gravure, offset, lithographic, letterpress or relief, screen printing and printing inks for packaging printing, non-impact inks such as inkjet inks including continuous inkjet and drop on demand inkjet which include thermal, piezo and electrostatic, phase change inks and hot melt wax inks, inks for ink-jet printers and print

varnishes such as overprint varnishes; polyol and plastisol dispersions; non-aqueous ceramic processes, especially tape-casting, gel-casting, doctor-blade, extrusion and injection moulding type processes, a further example would be in the preparation of dry ceramic powders for isostatic pressing; composites such as sheet moulding and bulk moulding compounds, resin transfer moulding, pultrusion, hand-lay-up and spray-lay-up processes, matched die moulding; construction materials like casting resins, cosmetics, personal care like nail coatings, sunscreens, adhesives, toners such as liquid toners, plastics materials and electronic materials such as coating formulations for colour filter systems in displays including organic light-emitting diode (OLED) devices, liquid crystal displays and electrophoretic displays, glass coatings including optical fiber coatings, reflective coatings or anti-reflective coatings, conductive and magnetic inks and coatings. They are useful in the surface modification of pigments and fillers to improve the dispersibility of dry powders used in the above applications. Further examples of coating materials are given in Bodo Muller, Ulrich Poth, Lackformulierung und Lackrezeptur, Lehrbuch fr Ausbildung und Praxis, Vincentz Verlag, Hanover (2003) and in P.G.Garrat, Strahlenhartung, Vincentz Verlag, Hanover (1996). Examples of printing ink formulations are given in E.W.Flick, Printing Ink and Overprint Varnish Formulations - Recent Developments, Noyes Publications, Park Ridge NJ, (1990) and subsequent editions.

In one embodiment, the composition of the invention further includes one or more additional known dispersants.

The polymeric dispersant of the invention herein is useful for making various particulate dispersions that go into inks, coatings, LCD (liquid crystal display) panels, and pigmented or filled polymer systems. A liquid-crystal display is a flat-panel display or other electronically modulated optical device that uses the light-modulating properties of liquid crystals. In another embodiment, the color filter composition is for a Quantum dot color filter.

The novel copolymers are especially useful in color filter application. In one embodiment, the color filter composition is comprising a) photo resist binder, b) transparent pigment, c) optionally a solvent and/or optionally a photoinitiator or a photolatent catalyst, and d) dispersant which is block copolymer of any of the appended composition or process claims.

The term photo resist binder refers to a photosensitive resin which is preferably an acid-curable resin or a photo curable resin such as acrylate, photo curable acrylate oligomer, polyester, alkyd, melamine, urea, epoxy and phenolic resins or mixtures thereof. Acid- curable resins of that kind are generally known and are described, for example, in "Ullmann's Encyclopdie der technischen Chemie," Edition 4, Vol. 15 (1978), pp. 613-628. Preferred are (meth)acrylate/(meth)acrylic acid copolymers.

Preferable examples of copolymers are copolymers of methyl (meth)acrylate and (meth)- acrylic acid, copolymers of benzyl (meth)acrylate and (meth)acrylic acid, copolymers of methyl (meth)acrylate/, ethyl (meth)acrylate and (meth)acrylic acid, copolymers of benzyl (meth)acrylate, (meth)acrylic acid and styrene, copolymers of benzyl (meth)acrylate, (meth)acrylic acid and 2-hydroxyethyl (meth)acrylate, copolymers of methyl (meth)acrylate/, butyl (meth)acrylate, (meth)acrylic acid and styrene, copolymers of methyl (meth)acrylate, benzyl (meth)acrylate, (meth)acrylic acid and hydroxyphenyl (meth)acrylate, copolymers of methyl (meth)acrylate, (meth)acrylic acid and polymethyl (meth)acrylate macromonomer, copolymers of benzyl (meth)acrylate, (meth)acrylic acid and polymethyl (meth)acrylate macromonomer, copolymers of tetrahydrofurfuryl (meth)acrylate, styrene and (meth)acrylic acid, copolymers of methyl (meth)acrylate, (meth)acrylic acid and polystyrene macromonomer, copolymers of benzyl (meth)acrylate, (meth)acrylic acid and polystyrene macro- monomer, copolymers of benzyl (meth)acrylate, (meth)acrylic acid, 2-hydroxyethyl (meth)- acrylate and polystyrene macromonomer, copolymers of benzyl (meth)acrylate, (meth)acrylic acid, 2-hydroxypropyl (meth)acrylate and polystyrene macro monomer, copolymers of benzyl (meth)acrylate, (meth)acrylic acid, 2-hydroxy-3-phenoxypropyl (meth)acrylate and polymethyl (meth)acrylate macromonomer, copolymers of methyl (meth)acrylate, (meth)acrylic acid, 2-hydroxyethyl (meth)acrylate and polystyrene macromonomer, copolymers of benzyl (meth)-acrylate, (meth)acrylic acid, 2-hydroxyethyl (meth)acrylate and polymethyl (meth)acrylate macromonomer, copolymers of N- phenylmaleimide, benzyl (meth)acrylate, (meth)acrylic acid and styrene, copolymers of benzyl (meth)acrylate, (meth)acrylic acid, N-phenylmaleimide, mono-[2- (meth)acryloyloxyethyl] succinate and styrene, copolymers of allyl (meth)acrylate, (meth)acrylic acid, N-phenylmaleimide, mono-[2-(meth)acryloyloxyethyl] succinate and styrene, copolymers of benzyl (meth)acrylate, (meth)acrylic acid, N-phenylmaleimide, glycerol mono(meth)acrylate and styrene, copolymers of benzyl (meth)acrylate, [omega]-carboxypolycaprolactone mono(meth)acrylate, (meth)acrylic acid, N-phenylmaleimide, glycerol mono(meth)acrylate and styrene, and copolymers of benzyl (meth)- acrylate, (meth)acrylic acid, N-cyclohexylmaleimide and styrene.

A photo curable acrylate oligomer is preferably present in addition to the photo curable resin. Photo curable acrylate oligomers usable herein include dipentaerythritol hexaacryl (DPHA), dipentaerythritol pentaacrylate (DPPA), pentaerythritol triacrylate (PETTA), trimethylol- propane triacrylate (TMPTA), and trimethylolpropane triacrylate (TMPTA) and the like.

The term transparent pigment refers to a pigment which gives a transparently colored ink when dispersed. The pigment may be inorganic or preferably organic, for example carbon black or pigments of the 1-aminoanthraquinone, anthanthrone, anthrapyrimidine, azo, azomethine, quinacridone, quinacridonequinone, quinophthalone, dioxazine, diketopyrrolopyrrole, flavanthrone, indanthrone, isoindoline, isoindolinone, isoviolanthrone, perinone, perylene, phthalocyanine, pyranthrone or thioindigo series, including those, where applicable, in the form of metal complexes or lakes, in particular unsubstituted or partially halogenated phthalocyanines such as copper, zinc or nickel phthalocyanines, 1 ,4-diketo-3,6-diaryl-pyrrolo[3,4-c]pyrroles, dioxazines, isoindolinones, indanthrones, perylenes and quinacridones. Azo pigments may be, for example, mono- or dis-azo pigments from any known sub-class, obtainable, for example, by coupling, condensation or lake formation.

## EXAMPLES

### Comparative Example 1

CE1 is a comb type copolymer with a styrene maleic anhydride back bone and pendant polyether chains. The synthesis is based on Example 10 from WO2008/122606A except propylene glycol monomethyl ether acetate replaces ethyl acetate

Styrene maleic anhydride copolymer (ex: Cray Valley, 3000 Mn, 12.5 parts by weight) and propylene glycol monomethyl ether acetate (80 parts) were stirred under nitrogen at 25° C for 3 hours. Surfonamine B200 (ex Huntsman, 40.75 parts) was added over a period of 35 minutes. The reaction was stirred at 25° C for 18 hours. The reaction mixture was then heated to 60° C for 3 hours. A sample (61.6 parts) was removed at this stage. To the remaining reaction mixture (71.4 parts), 3-(dimethylamino)-1-propylamine (0.09 parts) and propylene glycol monomethyl ether acetate (0.25 parts) were added and the reaction mixture was stirred for 15 hours at 80° C. The resulting yellow liquid had solids 40.1 wt.% with Mn = 5070 and Mw = 23150 as determined by GPC against polystyrene standards.

### Comparative Example 2

n-Butyl methacrylate (490 parts), butyl-2-methyl-2-[(dodecylsulfanylthiocarbonyl)sulfanyl] propionate (CTA-1 ex Lubrizol, 118.62 parts) and propylene glycol monomethyl ether acetate (792.10 parts) were stirred under nitrogen at 80° C. 2,2'-Azobis(2-methylpropionitrile) (2.32 parts) propylene glycol monomethyl ether acetate (20 parts) were charged over 2 hours at 80° C.

Butyl methacrylate (980 parts) and 2,2'-azobis(2-methylpropionitrile) (2.32 parts) in propylene glycol monomethyl ether acetate (580 parts) was charged to reaction over 9 hours at 80° C. An additional charge of propylene glycol monomethyl ether acetate (201.16 parts) was added to the reaction mixture after 50% of the butyl methacrylate had reacted. The reaction mixture was then heated at 80° C for a further 3 hours until the monomer conversion had exceeded 80 % as determined by solids content. The resulting polymer had molecular weight Mn = 7800 and Mw = 11300 as determined by GPC (tetrahydrofuran with 1% triethylamine eluent, polystyrene standards).

Propylene glycol monomethyl ether acetate (205.92 parts) was then charged to reaction vessel. 2-(Dimethylamino)ethyl methacrylate (630 parts) was fed to reaction over 1 hour, while simultaneously feeding 2,2'-azobis(2-methylpropionitrile) (1.16 parts) and propylene glycol monomethyl ether acetate (290 parts) over 2 hours.

After the end of the 2-hour initiator feed, the reaction mixture was heated at 80° C for 10 hours until the monomer conversion reached 100%. The resulting product was an amber liquid at 50.5 wt.% solids with Mn = 9600 and Mw = 14200 as determined by GPC (tetrahydrofuran with 1% triethylamine eluent, polystyrene standards).

### Intermediate A

n-Butyl acrylate (320 parts), butyl-2-methyl-2-[(dodecylsulfanylthiocarbonyl)sulfanyl] propionate (CTA-1 ex Lubrizol, 13 parts), 2,2'-azobis(2-methylpropionitrile) (0.256 parts) and propylene glycol monomethyl ether acetate (474 parts) were stirred at 70° C under nitrogen for 5 hours. 2,2'-azobis(2-methylpropionitrile) (0.256 parts) was added and the reaction stirred at 70° C for 6.5 hours until monomer conversion had exceeded 90% as determined by solids content. The resulting polymer had molecular weight Mn = 11500 and Mw = 15200 as determined by GPC (tetrahydrofuran eluent, polystyrene standards).

Propylene glycol monomethyl ether acetate (34 parts), maleic anhydride (61.20 parts), styrene (64.97 parts) and 2,2'-azobis(2-methylpropionitrile) (0.128 parts) were added and the reaction was stirred under nitrogen at 70° C for 22 hours until monomer conversion exceeded 95% by solids content. The resulting polymer was an amber liquid with Mn = 11400 and Mw = 21200 as determined by GPC (tetrahydrofuran with 1% eluent, polystyrene standards).

### Example 1

Intermediate A (225 parts) and 3-(dimethylamino)-1-propylamine (14.78 parts) were stirred at 70° C under nitrogen for 3 hours. Dean-Stark apparatus with condenser was fitted and the reaction was heated to 110° C for 23.5 hours under nitrogen. The resulting product was a brown liquid at 41.6 wt.% solids with Mn = 13000 and Mw = 17800

as determined by GPC (tetrahydrofuran with 1% triethylamine eluent, polystyrene standards). Imide formation was confirmed by infrared.

Example 2

Intermediate A (225 parts) and 1-(3-aminopropyl)imidazole (18.11 parts) were stirred at 70° C under nitrogen for 6 hours. Dean-Stark apparatus with condenser was fitted and the reaction was heated to 110° C for 41 hours under nitrogen. The resulting product was a brown liquid at 37.5 wt.% solids with Mn = 11100 and Mw = 13900 as determined by GPC (tetrahydrofuran with 1% triethylamine eluent, polystyrene standards). Imide formation was confirmed by infrared.

Example 3

Intermediate A (225 parts) and 3-picolylamine (15.64 parts) were stirred at 70° C under nitrogen for 3 hours. Dean-Stark apparatus with condenser was fitted and the reaction was heated to 110° C for 21 hours under nitrogen. The resulting product was a dark red liquid at 43.8 wt.% solids with Mn = 10700 and Mw = 15600 as determined by GPC (tetrahydrofuran with 1% triethylamine eluent, polystyrene standards). Imide formation was confirmed by infrared.

Example 4

Intermediate A (225 parts) and 4-picolylamine (15.64 parts) were stirred at 70° C under nitrogen for 3 hours. Dean-Stark apparatus with condenser was fitted and the reaction was heated to 110° C for 44 hours under nitrogen. The resulting product was a dark red liquid at 44.6 wt.% solids with Mn = 10900 and Mw = 15400 as determined by GPC (tetrahydrofuran with 1% triethylamine eluent, polystyrene standards). Imide formation was confirmed by infrared.

Dispersion testing

Examples 1-4 (1 part based on 100% active material) was dissolved in propylene glycol monomethyl ether acetate (8 parts). Glass beads (17 parts, 1 mm diameter) and red pigment (1 part, Irgaphor® Red S3621, ex BASF) were added and the contents were milled on a horizontal shaker for 48 hours. The resultant millbase was a fluid dispersion with the exception of Comparative Examples 1 and 2, which both gelled.

The particle size (PS) of the mill base was evaluated by diluting the dispersions (0.1 parts) with propylene glycol monomethyl ether acetate (20 parts) and evaluated using a Nanotrac particle size analyser.

| Example used in dispersion | Viscosity of mill base | PS (d50) / nm | PS (d90) / nm |
|---|---|---|---|
| CE1 | Gelled | 367 | 936 |
| CE2 | Gelled | 695 | 987 |
| EX1 | Fluid | 181 | 286 |
| EX2 | Fluid | 153 | 240 |
| EX3 | Fluid | 145 | 313 |
| EX4 | Fluid | 169 | 264 |

Dispersion stability

The millbases were then heated in an oven at 40-45° C for 96 hours and the particle size (PS) of the mill base was evaluated by diluting the dispersions (0.1 parts) with propylene glycol monomethyl ether acetate (20 parts) and evaluated using a Nanotrac particle size analyzer. The millbases remained stable by particle size with the exception of CE1.

| Example used in dispersion | 40-45° C ageing time | PS (d50) / nm | PS (d90) / nm |
|---|---|---|---|
| CE1 | 96 | 3980 | 5370 |
| EX1 | 96 | 206 | 338 |
| EX2 | 96 | 151 | 235 |

(continued)

| Example used in dispersion | 40-45° C ageing time | PS (d50) / nm | PS (d90) / nm |
|---|---|---|---|
| EX3 | 96 | 163 | 306 |
| EX4 | 96 | 162 | 262 |

As used herein, the transitional term "comprising," which is synonymous with "including," "containing," or "characterized by" is inclusive or open-ended and does not exclude additional, unrecited elements or method steps. However, in each recitation of "comprising" herein, it is intended that the term also encompass, as alternative embodiments, the phrases "consisting essentially of" and "consisting of," where "consisting of" excludes any element or step not specified and "consisting essentially of" permits the inclusion of additional unrecited elements or steps that do not materially affect the basic and novel characteristics of the composition or method under consideration.

## Claims

**1.** A polymeric dispersant comprising, at least 55wt.% of a block copolymer structure of formula shown below:

$$\{(\text{solubilizing block})\text{-}(\text{anchoring block})\}_v$$

wherein the solubilizing block or the anchoring block can occur first and optionally there is one additional solubilizing or one additional anchoring block but such that the total number of solubilizing blocks does not exceed the maximum value of v and the total number of anchoring blocks does not exceed the maximum value of v (such as 5, 3 or 2);
wherein the solubilizing block is $-(A)_x-$ and the anchoring block is a copolymer of the structure $-\{(B)_y-(D)_z\}_u-$;
x is at least 5;
y is at least 1;
z is 1, 2 or 3;
u is 1 to 25;
u(y+z) is at least 5;
v is 1 to 5; and
with the remaining wt.% of the polymeric dispersant being chain initiating groups, chain terminating groups or inadvertently inserted repeating units, wherein repeating units of the A structure comprises 25 to 80 wt.% of the dispersant, repeating units of the B structure comprises from 5 to 35 wt.% of the dispersant and combined repeating units of the D structure are from 5 to 50 wt.% of the dispersant, wherein said dispersant has a number average molecular weight of at least 2500 daltons;
wherein at least 90 mole% of the A units are selected from the group consisting of $A_1$, $A_2$, $A_3$, $A_4$, $A_5$ and $A_6$ units;
wherein $A_1$ is represented by a free radically polymerized alkyl(meth)acrylate of 4 to 24 carbon atoms);
wherein $A_2$ is represented by from polymerizing one or more repeating units disubstituted (meth)acrylamide monomers and is according to the formula below

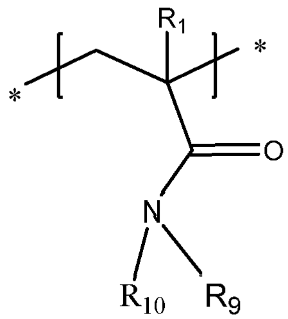

$A_2$

wherein $R_1$ is $CH_3$ or H and $R_9$ and $R_{10}$ individually are $C_1$-$C_8$ alkyl or aromatic or combinations of alkyl and aromatic groups or combinations thereof, optionally with a hydroxyl group, and optionally $R_9$ and $R_{10}$ can be

connected to each other to form a $C_2$-$C_{16}$ cyclic groups, wherein the $R_9$ and $R_{10}$ groups are selected from an alkyl, alkanol or aromatic;

wherein $A_3$ is represented by one or more repeat units from radically polymerizing an aromatic acrylate monomer into the structure

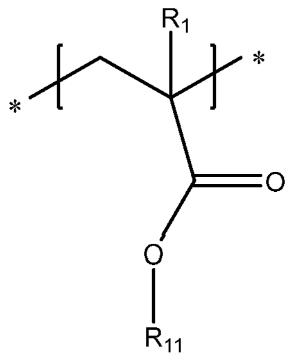

$A_3$

wherein $R_{11}$ is a $C_6$-$C_{12}$ aromatic or combination of aromatic and alkyl group optionally including hydroxyl group(s) and alkylene oxide group(s) substituted with an alkyl group;

wherein $A_4$ is represented by a repeat unit from free radically polymerizing one or more aromatic vinyl monomer and would have the structure as shown below

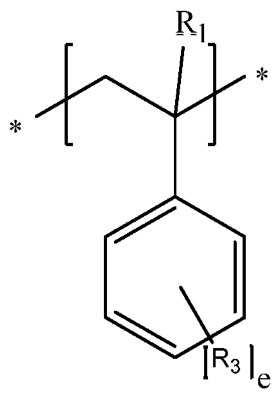

$A_4$

wherein $R_1$ is H or methyl and $R_3$ is one or more halogens, $C_1$-$C_{10}$ alkyl and/or aromatic group and preferably H or a $C_1$ to $C_4$ alkyl group, optionally including a halogen, one or more oxygen atom, and optionally including a nitrogen atom such as nitro group, the variable e can be 1, 2, 3, 4 or 5;

wherein $A_5$ is represented by repeat unit from radically polymerizing one or more polyester (meth)acrylate monomer of the formula

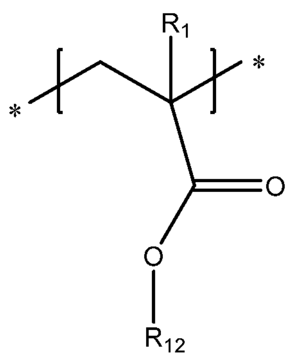

$A_5$

wherein -O-$R_{12}$ is at least one polymer chain comprising of a polyester with a number average molecular weight of at least 200;

wherein $A_6$ is represented by a repeat unit from free radically polymerizing a polyalkylene oxide (meth)acrylate of the formulae below

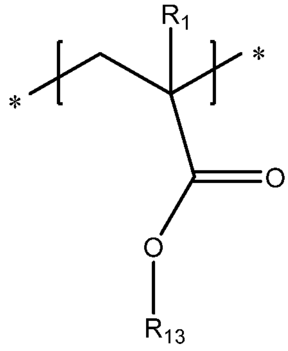

$A_6$

wherein $R_1$ is selected from H or methyl and $R_{13}$ is a polyalkylene oxide;
wherein B is a repeating unit from radically polymerizing a styrene monomer of 8 to 20 carbon atoms (optionally with heteroatoms or halogen(s)); and
D individually in each repeat unit is one or more $C_4$-$C_6$ dicarboxylic or anhydride thereof repeating unit with $D_1 + D_2 + D_3 + D_4$ = 100 mole % of D, wherein at least 50 mole % of D = $D_3 + D_4$ and the mole % of $D_4$ is greater than that of $D_3$ such that greater than 50 mole % of D = $D_4$, and
wherein $D_1$ has an anhydride structure, $D_2$ having all carboxylic groups in acid or salt form, $D_3$ is an amide formed by reacting dicarboxylic acid $D_1$ or dicarboxylic acid $D_2$ with an aminic reactant and $D_4$ is an imide formed by reacting dicarboxylic acid $D_1$ or dicarboxylic acid $D_2$ with an aminic reactant, wherein the aminic reactant has 4 to 30 carbon atoms and 2 to 10 (nitrogen atoms (optionally including one or two oxygen atoms), wherein at least one nitrogen atom is a primary or secondary amine capable of reacting with a carboxylic acid to form an amide or imide bond and at least one second nitrogen is a tertiary nitrogen or a nitrogen in an aromatic ring, or a tertiary nitrogen in an imidazole ring.

2. The polymeric dispersant according to claim 1, wherein D is comprised of or consists of $D_1$, $D_2$, $D_3$ and $D_4$.

3. The polymeric dispersant according to claim 1, wherein the aminic component reacted with the dicarboxylic acid repeat unit or anhydride thereof is selected from the group consisting of primary amine is selected from N,N-dimethylaminopropylamine, 4-(aminoethyl)morpholine, 2-(2-aminoethyl)-1-methyl pyrrolidine, 1-(2-aminoethyl)pyrrolidine, 2-(2-aminoethyl pyridine), 1-(2-aminoethyl)piperazine, 1-(2-aminoethyl)piperidine, 1-(3-aminopropyl)imidazole, 4-(3-aminopropyl)morpholine, 1-(3-aminopropyl)-2-pipecoline, 1-(3-aminopropyl)-2-pyrrolidinone, tris(2-aminoethyl)amine, 1,4,7-trimethyldiethylenetriamine, diethylene triamine, tetraethylenepentamine, or a combination thereof; or selected from 2-(2-pyridyl)ethylamine, 4-(2-aminoethyl)pyridine, 4-(1-aminoethyl)pyridine, 3-(2-aminoethyl)pyridine, 2-(1-aminoethyl)pyridine, and 1-pyridin-3-yl-ethylamine, 2-(2-methylaminoethyl)pyridine, 4-(aminomethyl)pyridine, 2-amino-4-methylpyridine, 2-amino-6-methylpyridine, 2-amino-3-methylpyridine, 2-amino-3-methylpyridine, 4-amino-2-methylpyridine, 5-amino-2-methylpyridine, 3-amino-4-methylpyridine, 3-amino-5-methylpyridine, and 2-(6-methylpyridin-2-yl)ethylamine.

4. The polymeric dispersant according to any of the previous claims, wherein said polymeric dispersant has a number average molecular weight of 5,000 to 20,000 dalton.

5. The polymeric dispersant according to any of claims 1-4, wherein $D_3$ and $D_4$ combined are at least 80 mole% of said D groups.

6. The polymeric dispersant according to any of claims 1-5, wherein at least 80 mole% of said A repeating units in said dispersant are $A_1$ having the structure:

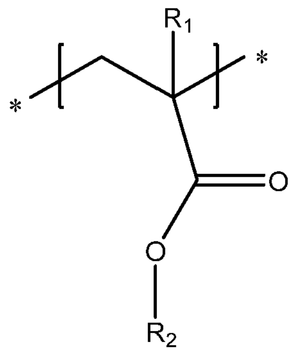

A1

wherein $R_1$ is $CH_3$ or H, and $R_2$ is a linear or branched alkyl group of 1 to 12 carbon atoms.

**7.** The polymeric dispersant according to any of claims 1-6, wherein at least 80 mole% of said B groups are non-substituted styrene repeating units.

**8.** The polymeric dispersant according to any of claims 1-7, wherein at least 80 mole% of said D units comprises at least one tertiary amine.

**9.** The polymeric dispersant according to any of claims 1-7, wherein at least 80 mole% of said D units comprises at least one imidazole or pyridine ring.

**10.** The polymeric dispersant according to any of claims 1-9, wherein said polymeric dispersant is a diblock copolymer.

**11.** The polymeric dispersant according to any of claims 1-9, wherein said polymeric dispersant is a triblock copolymer.

**12.** A composition comprising a particulate in dispersed form, a continuous media, and a polymeric dispersant any of claims 1 to 11; wherein said particulate interacts preferentially with said anchoring block(s), and said continuous media comprising a polar organic medium, or a non-polar organic medium interacts preferentially with said solubilizing block(s).

**13.** The composition of claim 12, wherein the composition is a millbase, paint or ink.

**14.** The composition of claims 12 or 13, wherein the particulate solid is a pigment or filler.

**15.** The composition of any of claims 12-14, further comprising a binder.

**16.** The composition of any of claims 12-15, wherein the composition is used in a color filter.

**17.** The composition of any of claims 12-14, wherein the polymeric dispersant is present in an amount ranging from 0.5 wt.% to 30 wt.%, or 1 wt.% to 25 wt.% of the composition.

**18.** A process for forming a polymeric dispersant comprising:

a) polymerizing by a controlled free radical polymerization at least one $-A_x-$ block and at least one $-(B_y-D_z)_u-$ block and optionally multiple $-A_x-$ blocks and $-(B_y-D_z)_u-$ blocks where A, B, D, x, y, z, and u are as defined in claim 1;
b) modifying said block copolymer by reacting at least 50 mole% of said D units with an aminic component having at least one amine reactive with carboxylic acid groups to form amide or imide bonds and at least one second amine group characterized as a tertiary amine or an amine in an aromatic ring or an amine in an imidazole ring; and
c) optionally wherein said polymeric dispersant has unreacted carboxylic acid groups from said D component and one or more of said carboxylic acid groups are reacted with aminic reactants to reduce the acidity of said D repeat units.

**19.** The process according to claim 18, wherein said controlled free radical polymerization involves a RAFT polymerization process.

**20.** The process according to claim 19, wherein said controlled free radical polymerization involves an OLRP polymerization process.

**21.** The process according to any of claims 19-20, wherein at least 80 mole percent of the A repeat units are an alkyl (meth)acrylate wherein the (meth) group is optionally present and the alkyl group is a $C_1$ to $C_{12}$ linear or branched alkyl group.

**Patentansprüche**

**1.** Polymeres Dispergiermittel, umfassend zu mindestens 55 Gew.-% eine Blockcopolymerstruktur der nachstehend gezeigten Formel:

$$\{(\text{Solubilisierungsblock})\text{-}(\text{Verankerungsblock})\}_v$$

wobei der Solubilisierungsblock oder der Verankerungsblock zuerst auftreten kann und es wahlweise einen zusätzlichen Solubilisierungs- oder einen zusätzlichen Verankerungsblock gibt, aber so dass die Gesamtanzahl von Solubilisierungsblöcken nicht den Maximalwert von v überschreitet und die Gesamtanzahl von Verankerungsblöcken nicht den Maximalwert von v überschreitet (wie 5, 3 oder 2);
wobei der Solubilisierungsblock $-(A)_x-$ ist und der Verankerungsblock ein Copolymer der Struktur $-\{(B)_y-(D)_z\}_u-$ ist;
x mindestens 5 ist;
y mindestens 1 ist;
z 1, 2 oder 3 ist;
u 1 bis 25 ist;
u (y+z) mindestens 5 ist;
v 1 bis 5 ist; und
wobei die verbleibenden Gew.-% des polymeren Dispergiermittels Ketteninitiierungsgruppen, Kettenabschlussgruppen oder unabsichtlich eingeführte Wiederholungseinheiten sind, wobei Wiederholungseinheiten der A-Struktur zu 25 bis 80 Gew.-% das Dispergiermittel umfassen, Wiederholungseinheiten der B-Struktur von zu 5 bis 35 Gew.-% das Dispergiermittel umfassen und kombinierte Wiederholungseinheiten der D-Struktur von zu 5 bis 50 Gew.-% das Dispergiermittel betragen, wobei das Dispergiermittel ein zahlenmittleres Molekulargewicht von mindestens 2500Dalton aufweist;
wobei mindestens 90 Mol-% der A-Einheiten aus der Gruppe ausgewählt sind, bestehend aus $A_1$-, $A_2$-, $A_3$-, $A_4$-, As- und As-Einheiten;
wobei $A_1$ durch ein radikalisch polymerisiertes Alkyl(meth)acrylat mit 4 bis 24 Kohlenstoffatomen) dargestellt ist;
wobei $A_2$ durch aus Polymerisieren einer oder mehrerer Wiederholungseinheiten disubstituierter (Meth)acrylamidmonomere dargestellt wird und der nachstehenden Formel entspricht

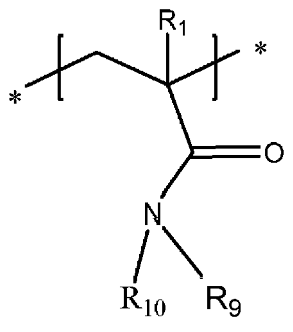
$A_2$

wobei $R_1$ $CH_3$ oder H ist und $R_9$ und $R_{10}$ einzeln $C_1$-$C_8$-Alkyl oder -Aromat oder Kombinationen von Alkyl- und Aromatgruppen oder Kombinationen davon sind, wahlweise mit einer Hydroxylgruppe, und wahlweise können $R_9$ und $R_{10}$ miteinander verbunden sein, um eine cyclische $C_2$-$C_{16}$-Gruppen zu bilden, wobei die $R_9$- und $R_{10}$-Gruppen aus einem Alkyl, einem Alkanol oder einem Aromaten ausgewählt sind;
wobei $A_3$ durch eine oder mehrere Wiederholungseinheiten aus radikalischem Polymerisieren eines aromatischen Acrylatmonomers zu der folgenden Struktur dargestellt wird

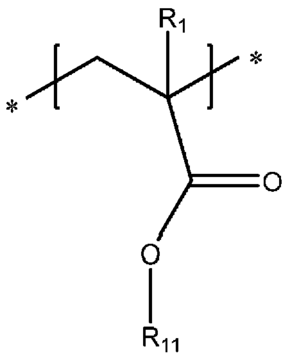

A3

wobei $R_{11}$ ein $C_6$-$C_{12}$-Aromat oder eine Kombination von Aromat- und Alkylgruppe ist, die wahlweise Hydroxylgruppe(n) und Alkylenoxidgruppe(n) einschließt, die mit einer Alkylgruppe substituiert sind;
wobei $A_4$ durch eine Wiederholungseinheit aus radikalischem Polymerisieren eines oder mehrerer aromatischer Vinylmonomere dargestellt ist und die Struktur wie nachstehend gezeigt hätte

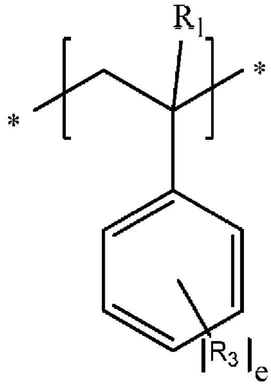

A4

wobei $R_1$ H oder Methyl ist und $R_3$ ein oder mehrere Halogene, $C_1$-$C_{10}$-Alkyl- und/oder Aromatgruppe und vorzugsweise H oder eine $C_1$- bis $C_4$-Alkylgruppe ist, die wahlweise ein Halogen, ein oder mehrere Sauerstoffatome einschließt und wahlweise ein Stickstoffatom einschließt, wie eine Nitrogruppe, wobei die Variable e 1, 2, 3, 4 oder 5 betragen kann;
wobei $A_5$ durch Wiederholungseinheiten aus radikalischem Polymerisieren eines oder mehrerer Polyester(meth)acrylatmonomere der folgenden Formel dargestellt wird

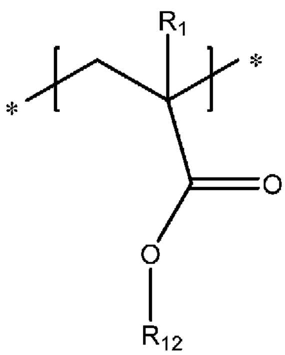

A5

wobei -O-$R_{12}$ mindestens eine Polymerkette ist, umfassend ein Polyester mit einem zahlenmittleren Molekulargewicht von mindestens 200;
wobei $A_6$ durch eine Wiederholungseinheit aus radikalischem Polymerisieren eines Polyalkylenoxid(meth)acrylats der nachstehenden Formeln dargestellt wird

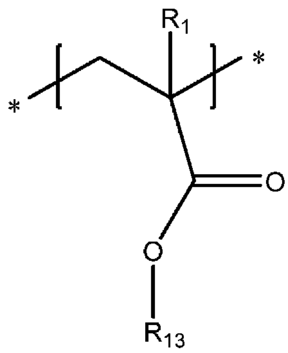

A6

wobei $R_1$ aus H oder Methyl ausgewählt ist und $R_{13}$ ein Polyalkylenoxid ist;
wobei B eine Wiederholungseinheit aus radikalischem Polymerisieren eines Styrolmonomers mit 8 bis 20 Kohlenstoffatomen (wahlweise mit Heteroatomen oder Halogen(en)) ist; und
D einzeln in jeder Wiederholungseinheit eine oder mehrere Wiederholungseinheiten von $C_4$-$C_6$-Dicarbon oder Anhydrid davon ist, wobei $D_1 + D_2 + D_3 + D_4 = 100$ Mol-% von D, wobei mindestens 50 Mol-% von $D = D_3 + D_4$ und die Mol-% von $D_4$ mehr als die von $D_3$ betragen, so dass mehr als 50 Mol-% von $D = D_4$, und
wobei $D_1$ eine Anhydridstruktur aufweist, $D_2$ alle Carboxylgruppen in Säure- oder Salzform aufweist, $D_3$ ein Amid ist, das durch Reagieren von Dicarbonsäure $D_1$ oder Dicarbonsäure $D_2$ mit einem aminischen Reaktionspartner gebildet wird, und $D_4$ ein Imid ist, das durch Reagieren von Dicarbonsäure $D_1$ oder Dicarbonsäure $D_2$ mit einem aminischen Reaktionspartner gebildet wird, wobei der aminische Reaktionspartner 4 bis 30 Kohlenstoffatome und 2 bis 10 (Stickstoffatome (die wahlweise ein oder zwei Sauerstoffatome einschließen) aufweist, wobei mindestens ein Stickstoffatom ein primäres oder sekundäres Amin sind, das in der Lage ist, mit einer Carbonsäure zu reagieren, um eine Amid- oder Imidbindung zu bilden, und mindestens ein zweiter Stickstoff ein tertiärer Stickstoff oder ein Stickstoff in einem Aromatring oder ein tertiärer Stickstoff in einem Imidazolring ist.

2. Polymeres Dispergiermittel nach Anspruch 1, wobei D $D_1$, $D_2$, $D_3$ und $D_4$ umfasst oder daraus besteht.

3. Polymeres Dispergiermittel nach Anspruch 1, wobei die aminische Komponente, die mit der Dicarbonsäure-Wiederholungseinheit oder dem Anhydrid davon reagiert wird, aus der Gruppe ausgewählt ist, bestehend aus primärem Amin, aus N,N-Dimethylaminopropylamin, 4-(Aminoethyl)morpholin, 2-(2-Aminoethyl)-1-methylpyrrolidin, 1-(2-Aminoethyl)pyrrolidin, 2-(2-Aminoethylpyridin), 1-(2-Aminoethyl)piperazin, 1-(2-Aminoethyl)piperidin, 1-(3-Aminopropyl)imidazol, 4-(3-Aminopropyl)morpholin, 1-(3-Aminopropyl)-2-pipecolin, 1-(3-Aminopropyl)-2-pyrrolidinon, Tris(2-aminoethyl)amin, 1,4,7-Trimethyldiethylentriamin, Diethylentriamin, Tetraethylenpentamin oder einer Kombination davon ausgewählt; oder aus 2-(2-Pyridyl)ethylamin, 4-(2-Aminoethyl)pyridin, 4-(1-Aminoethyl)pyridin, 3-(2-Aminoethyl)pyridin, 2-(1-Aminoethyl)pyridin und 1-Pyridin-3-ylethylamin, 2-(2-Methylaminoethyl)pyridin, 4-(Aminomethyl)pyridin, 2-Amino-4-methylpyridin, 2-Amino-6-methylpyridin, 2-Amino-3-methylpyridin, 2-Amino-3-methylpyridin, 4-Amino-2-methylpyridin, 5-Amino-2-methylpyridin, 3-Amino-4-methylpyridin, 3-Amino-5-methylpyridin und 2-(6-Methylpyridin-2-yl)ethylamin ausgewählt ist.

4. Polymeres Dispergiermittel nach einem der vorstehenden Ansprüche, wobei das polymere Dispergiermittel ein zahlenmittleres Molekulargewicht von 5.000 bis 20.000 Dalton aufweist.

5. Polymeres Dispergiermittel nach einem der Ansprüche 1 bis 4, wobei $D_3$ und $D_4$ kombiniert mindestens 80 Mol-% der D-Gruppen betragen.

6. Polymeres Dispergiermittel nach einem der Ansprüche 1 bis 5, wobei mindestens 80 Mol-% der A-Wiederholungseinheiten in dem Dispergiermittel A1 sind, das die folgende Struktur aufweist:

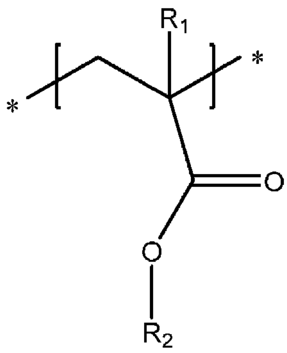

A1

wobei $R_1$ $CH_3$ oder H ist und $R_2$ eine lineare oder verzweigte Alkylgruppe mit 1 bis 12Kohlenstoffatomen ist.

**7.** Polymeres Dispergiermittel nach einem der Ansprüche 1 bis 6, wobei mindestens 80 Mol-% der B-Gruppen unsubstituierte Styrol-Wiederholungseinheiten sind.

**8.** Polymeres Dispergiermittel nach einem der Ansprüche 1 bis 7, wobei mindestens 80 Mol-% der D-Einheiten mindestens ein tertiäres Amin umfassen.

**9.** Polymeres Dispergiermittel nach einem der Ansprüche 1 bis 7, wobei mindestens 80 Mol-% der D-Einheiten mindestens einen Imidazol- oder Pyridinring umfassen.

**10.** Polymeres Dispergiermittel nach einem der Ansprüche 1 bis 9, wobei das polymere Dispergiermittel ein Diblockcopolymer ist.

**11.** Polymeres Dispergiermittel nach einem der Ansprüche 1 bis 9, wobei das polymere Dispergiermittel ein Triblockcopolymer ist.

**12.** Zusammensetzung, umfassend ein Teilchen in dispergierter Form, ein kontinuierliches Medium und ein polymeres Dispergiermittel nach einem der Ansprüche 1 bis 11; wobei das Teilchen vorzugsweise mit dem/den Verankerungsblock/Verankerungsblöcken interagiert und das kontinuierliche Medium, umfassend ein polares organisches Medium oder ein unpolares organisches Medium, vorzugsweise mit dem/den Solubilisierungsblock/Solubilisierungsblöcken interagiert.

**13.** Zusammensetzung nach Anspruch 12, wobei die Zusammensetzung ein Mahlgut, eine Farbe oder Tinte ist.

**14.** Zusammensetzung nach Anspruch 12 oder 13, wobei der teilchenförmige Feststoff ein Pigment oder Füllstoff ist.

**15.** Zusammensetzung nach einem der Ansprüche 12 bis 14, ferner umfassend ein Bindemittel.

**16.** Zusammensetzung nach einem der Ansprüche 12 bis 15, wobei die Zusammensetzung in einem Farbfilter verwendet wird.

**17.** Zusammensetzung nach einem der Ansprüche 12 bis 14, wobei das polymere Dispergiermittel in einer Menge, die von 0,5 Gew.-% bis 30 Gew.-% oder 1 Gew.-% bis 25 Gew.-% der Zusammensetzung reicht, vorhanden ist.

**18.** Verfahren zum Bilden eines polymeren Dispergiermittels, umfassend:

a) Polymerisieren durch eine kontrollierte radikalische Polymerisation mindestens eines -$A_x$-Blocks und mindestens eines -$(B_y-D_z)_u$-Blocks und wahlweise mehrerer -$A_x$-Blöcke und -$(B_y-D_z)_u$-Blöcke, wobei A, B, D, x, y, z und u wie in Anspruch 1 definiert sind;
b) Modifizieren des Blockcopolymers durch Reagieren von mindestens 50 Mol-% der D-Einheiten mit einer aminischen Komponente, die mindestens ein mit Carbonsäuregruppen reaktives Amin aufweist, um Amid- oder Imidbindungen zu bilden, und mindestens einer zweiten Amingruppe, die als ein tertiäres Amin oder ein Amin in einem Aromatring oder ein Amin in einem Imidazolring gekennzeichnet ist; und
c) wobei wahlweise das polymere Dispergiermittel nicht reagierte Carbonsäuregruppen von der D-Komponente

aufweist und eine oder mehrere der Carbonsäuregruppen mit aminischen Reaktionspartnern reagiert werden, um den Säuregrad der D-Wiederholungseinheiten zu reduzieren.

**19.** Verfahren nach Anspruch 18, wobei die kontrollierte radikalische Polymerisation einen RAFT-Polymerisationsprozess beinhaltet.

**20.** Verfahren nach Anspruch 19, wobei die kontrollierte radikalische Polymerisation einen OLRP-Polymerisationsprozess beinhaltet.

**21.** Verfahren nach einem der Ansprüche 19 bis 20, wobei mindestens 80 Molprozent der A-Wiederholungseinheiten ein Alkyl(meth)acrylat sind, wobei die (Meth)gruppe wahlweise vorhanden ist und die Alkylgruppe eine lineare oder verzweigte $C_1$- bis $C_{12}$-Alkylgruppe ist.

## Revendications

**1.** Dispersant polymère comprenant, au moins 55 % en poids d'une structure de copolymère séquencé de formule montrée ci-dessous :

$$\{(\text{séquence de solubilisation}) - (\text{séquence d'ancrage})\}_v$$

dans lequel la séquence de solubilisation ou la séquence d'ancrage peut se produire d'abord et éventuellement il y a une solubilisation supplémentaire ou une séquence d'ancrage supplémentaire mais de telle sorte que le nombre total de séquences de solubilisation ne dépasse pas la valeur maximale de v et que le nombre total de séquences d'ancrage ne dépasse pas la valeur maximale de v (telle que 5, 3 ou 2) ;
dans lequel la séquence de solubilisation est $-(A)_x-$ et la séquence d'ancrage est un copolymère de la structure $-\{(B)_y-(D)_z\}_u-$;
x vaut au moins 5 ;
y vaut au moins I;
z vaut 1, 2 ou 3 ;
u vaut de 1 à 25 ;
u (y + z) vaut au moins 5 ;
v vaut de 1 à 5 ; et
les % en poids restants du dispersant polymère étant des groupes initiateurs de chaîne, des groupes de terminaison de chaîne ou des motifs répétés insérés par accident, dans lequel des motifs répétés de la structure A comprennent 25 à 80 % en poids du dispersant, des motifs répétés de la structure B comprennent de 5 à 35 % en poids du dispersant et des motifs répétés combinés de la structure D sont de 5 à 50 % en poids du dispersant, dans lequel ledit dispersant a une masse moléculaire moyenne en nombre d'au moins 2 500 daltons ;
dans lequel au moins 90 % molaires des motifs A sont choisis dans le groupe constitué de motifs $A_1$, $A_2$, $A_3$, $A_4$, $A_5$ et $A_6$ ;
dans lequel $A_1$ est représenté par un (méth)acrylate d'alkyle polymérisé par radicaux libres de 4 à 24 atomes de carbone) ;
dans lequel $A_2$ est représenté par la polymérisation d'un ou plusieurs motifs répétés de monomères (méth)acrylamide disubstitués et est selon la formule ci-dessous

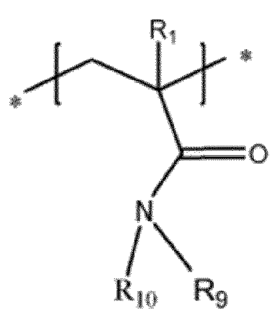

$A_2$

dans laquelle $R_1$ est $CH_3$ ou H et $R_9$ et $R_{10}$ sont individuellement des groupes alkyle ou aromatique en $C_1$ à

Ca ou des combinaisons de groupes alkyle et aromatique ou leurs combinaisons, éventuellement avec un groupe hydroxyle, et éventuellement $R_9$ et $R_{10}$ peuvent être reliés entre eux pour former un groupes cyclique en $C_2$ à $C_{16}$, dans laquelle les groupes $R_9$ et $R_{10}$ sont choisis parmi un alkyle, un alcanol ou un aromatique ;
dans laquelle $A_3$ est représenté par un ou plusieurs motifs de répétition à partir de polymérisation par radicaux d'un monomère acrylate aromatique dans la structure

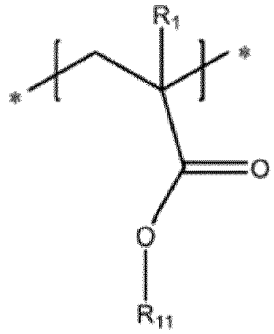

$A_3$

dans laquelle $R_{11}$ est un aromatique en $C_6$ à $C_{12}$ ou une combinaison de groupes aromatiques et alkyle comportant éventuellement un ou plusieurs groupes hydroxyle ou un ou plusieurs groupes oxyde d'alkylène substitués par un groupe alkyle ;
dans laquelle $A_4$ est représenté par un motif de répétition à partir de polymérisation par radicaux libres d'un ou plusieurs monomères vinyliques aromatiques et qui aurait la structure telle que montrée ci-dessous

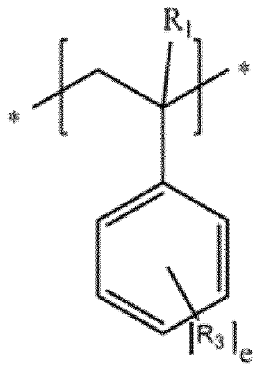

$A_4$

dans laquelle $R_1$ est H ou méthyle et $R_3$ est un ou plusieurs halogènes, groupe alkyle et/ou aromatique en $C_1$ à $C_{10}$ et de préférence H ou un groupe alkyle en $C_1$ à $C_4$, comportant éventuellement un halogène, un ou plusieurs atomes d'oxygène, et comportant éventuellement un atome d'azote tel qu'un groupe nitro, la variable peut être 1, 2, 3, 4 ou 5 ;
dans laquelle $A_5$ est représenté par un motif de répétition à partir de polymérisation par radicaux d'un ou plusieurs monomères (méth)acrylate de polyester de formule

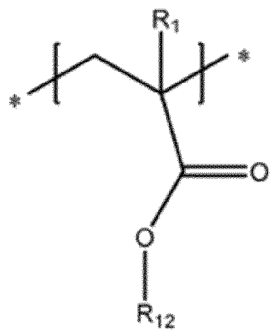

$A_5$

dans laquelle $-O-R_{12}$ est au moins une chaîne polymère comprenant un polyester ayant une masse moléculaire

moyenne en nombre d'au moins 200 ;
dans laquelle $A_6$ est représenté par un motif de répétition à partir de la polymérisation par radicaux libres d'un (méth)acrylate d'oxyde de polyalkylène des formules ci-dessous

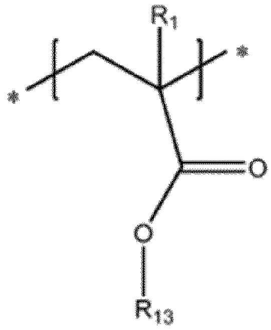

$A_6$

dans laquelle $R_1$ est choisi parmi H ou méthyle et $R_{13}$ est un oxyde de polyalkylène ;
dans laquelle B est un motif répété à partir de polymérisation par radicaux d'un monomère styrène de 8 à 20 atomes de carbone (éventuellement avec des hétéroatomes ou un ou plusieurs halogènes) ; et
D individuellement dans chaque motif de répétition est un ou plusieurs motifs répétés anhydride ou dicarboxylique en $C_4$ à $C_6$ de celui-ci avec $D_1 + D_2 + D_3 + D_4$ = 100 % molaires de D, dans lequel au moins 50 % molaires de D = $D_3 + D_4$ et le % molaire de $D_4$ est supérieur à celui de $D_3$ de sorte que plus de 50 % molaires de D = $D_4$, et dans lequel $D_1$ a une structure anhydride, $D_2$ ayant tous les groupes carboxyliques sous forme acide ou saline, $D_3$ est un amide formé par réaction d'acide dicarboxylique $D_1$ ou d'acide dicarboxylique $D_2$ avec un réactif aminique et $D_4$ est un imide formé par réaction d'acide dicarboxylique $D_1$ ou d'acide dicarboxylique $D_2$ avec un réactif aminique, dans lequel le réactif aminique a 4 à 30 atomes de carbone et 2 à 10 (atomes d'azote (comportant éventuellement un ou deux atomes d'oxygène), dans lequel au moins un atome d'azote est une amine primaire ou secondaire capable de réagir avec un acide carboxylique pour former une liaison amide ou imide et au moins un second azote est un azote tertiaire ou un azote dans un cycle aromatique, ou un azote tertiaire dans un cycle imidazole.

**2.** Dispersant polymère selon la revendication 1, dans lequel D est composé ou est constitué de $D_1$, $D_2$, $D_3$ et $D_4$.

**3.** Dispersant polymère selon la revendication 1, dans lequel le composant aminique mis en réaction avec le motif de répétition acide dicarboxylique ou l'anhydride de celui-ci est choisi dans le groupe constitué d'amine primaire est choisi parmi N,N-diméthylaminopropylamine, 4-(aminoéthyl)morpholine, 2-(2-aminoéthyl)-1-méthyl pyrrolidine, 1-(2-aminoéthyl) pyrrolidine, 2-(2-aminoéthyl pyridine), 1-(2-aminoéthyl)pipérazine, 1-(2-aminoéthyl)pipéridine, 1-(3-aminopropyl)imidazole, 4-(3- aminopropyl)morpholine, 1-(3-aminopropyl)-2-pipecoline, 1-(3-aminopropyl)-2-pyrrolidinone, tris(2-aminoéthyl)amine, 1,4,7-triméthyldiéthylènetriamine, diéthylène triamine, tétraéthylène-éthylamine ou leur combinaison ; ou choisi parmi 2-(2-pyridyl)éthylamine, 4-(2-aminoéthyl) pyridine, 4-(1-aminoéthyl)pyridine, 3-(2-aminoéthyl)pyridine, 2-(1- aminoéthyl)pyridine et 1-pyridin-3-yl-éthylamine, 2-(2-méthylaminoéthyl)pyridine, 4-(aminométhyl) pyridine, 2-amino-4-méthylpyridine, 2-amino-6-méthylpyridine, 2-amino-3- méthylpyridine, 2-amino-3-méthylpyridine, 4-amino-2-méthylpyridine, 5-amino-2-méthylpyridine, 3-amino-4-méthylpyridine, 3-amino-5-méthylpyridine et 2-(6-méthylpyridin-2-yl)éthylamine.

**4.** Dispersant polymère selon l'une quelconque des revendications précédentes, dans lequel ledit dispersant polymère a une masse moléculaire moyenne en nombre de 5 000 à 20 000 daltons.

**5.** Dispersant polymère selon l'une quelconque des revendications 1 à 4, dans lequel $D_3$ et $D_4$ combinés sont au moins 80 % molaires desdits groupes D.

**6.** Dispersant polymère selon l'une quelconque des revendications 1 à 5, dans lequel au moins 80 % molaires desdits motifs répétés A dans ledit dispersant sont $A_1$ ayant la structure :

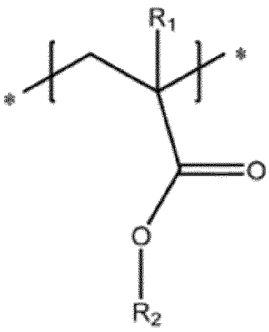

A1

dans laquelle $R_1$ est $CH_3$ ou H, et $R_2$ est un groupe alkyle linéaire ou ramifié de 1 à 12 atomes de carbone.

**7.** Dispersant polymère selon l'une quelconque des revendications 1 à 6, dans lequel au moins 80 % molaires desdits groupes B sont des motifs répétés de styrène non substitué.

**8.** Dispersant polymère selon l'une quelconque des revendications 1 à 7, dans lequel au moins 80 % molaires desdits motifs D comprennent au moins une amine tertiaire.

**9.** Dispersant polymère selon l'une quelconque des revendications 1 à 7, dans lequel au moins 80 % molaires desdits motifs D comprennent au moins un cycle imidazole ou pyridine.

**10.** Dispersant polymère selon l'une quelconque des revendications 1 à 9, dans lequel ledit dispersant polymère est un copolymère biséquencé.

**11.** Dispersant polymère selon l'une quelconque des revendications 1 à 9, dans lequel ledit dispersant polymère est un copolymère triséquencé.

**12.** Composition comprenant une matière particulaire sous forme dispersée, un milieu continu, et un dispersant polymère selon l'une quelconque des revendications 1 à 11 ; dans laquelle ladite matière particulaire interagit préférentiellement avec ladite ou lesdites séquences d'ancrage, et ledit milieu continu comprenant un milieu organique polaire, ou un milieu organique apolaire interagit préférentiellement avec ladite ou lesdites séquences de solubilisation.

**13.** Composition selon la revendication 12, dans laquelle la composition est une pâte-mère, une peinture ou une encre.

**14.** Composition selon les revendications 12 ou 13, dans laquelle le solide particulaire est un pigment ou une charge.

**15.** Composition selon l'une quelconque des revendications 12 à 14, comprenant en outre un liant.

**16.** Composition selon l'une quelconque des revendications 12 à 15, dans laquelle la composition est utilisée dans un filtre coloré.

**17.** Composition selon l'une quelconque des revendications 12 à 14, dans laquelle le dispersant polymère est présent en une quantité allant de 0,5 % en poids à 30 % en poids, ou 1 % en poids à 25 % en poids de la composition.

**18.** Procédé de formation d'un dispersant polymère comprenant :

a) la polymérisation par polymérisation par radicaux libres contrôlée d'au moins une séquence $-A_x-$ et d'au moins une séquence $-(B_yD_z)_u-$ et éventuellement plusieurs séquences $-A_x-$ et séquences $-(B_yD_z)_u-$ où A, B, D, x, y, z et u sont tels que définis dans la revendication 1 ;
b) la modification dudit copolymère séquencé en faisant réagir au moins 50 % molaires desdits motifs D avec un composant aminique ayant au moins une amine réactive avec des groupes acide carboxylique pour former des liaisons amide ou imide et au moins un second groupe amine caractérisé en tant qu'amine tertiaire ou amine dans un cycle aromatique ou une amine dans un cycle imidazole ; et
c) éventuellement dans lequel ledit dispersant polymère a des groupes acide carboxylique n'ayant pas réagi provenant dudit composant D et un ou plusieurs desdits groupes acide carboxylique sont mis en réaction avec des réactifs aminiques pour réduire l'acidité desdits motifs de répétition D.

**19.** Procédé selon la revendication 18, dans lequel ladite polymérisation par radicaux libres contrôlée implique un procédé de polymérisation RAFT.

**20.** Procédé selon la revendication 19, dans lequel ladite polymérisation par radicaux libres contrôlée implique un procédé de polymérisation OLRP.

**21.** Procédé selon l'une quelconque des revendications 19 à 20, dans lequel au moins 80 % molaires des motifs de répétition A sont un (méth)acrylate d'alkyle dans lequel le groupe (méth)acrylate est éventuellement présent et le groupe alkyle est un groupe alkyle en $C_1$ à $C_{12}$ linéaire ou ramifié.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 9416280 B
- WO 2008122606 A
- US 7838574 B
- US 8153731 B
- DE 102006062439
- US 8129476 B
- DE 102006062441
- US 4755563 A
- US 2010081769 A1
- US 2012190795 A
- US 8575285 B2
- US 9018325 B2
- US 8742045 B2


### Non-patent literature cited in the description


- *Polym. Chem.,* 2010, vol. 1, 149-157
- Colour Index. 1971
- Industrial Microbial Agents. Kirk-Othmer's Encyclopedia of Chemical Technology. 1981, vol. 13
- A Three-Dimensional Approach to Solubility. **CROWLEY et al.** Journal of Paint Technology. 1966, vol. 38, 269
- **IBERT MELLAN.** Compatibility and Solubility. Noyes Development Corporation, 1968, 39-40
- **BODO MULLER ; ULRICH POTH.** Lackformulierung und Lackrezeptur, Lehrbuch fr Ausbildung und Praxis. Vincentz Verlag, 2003
- **P.G.GARRAT.** Strahlenhartung. Vincentz Verlag, 1996
- **E.W.FLICK.** Printing Ink and Overprint Varnish Formulations - Recent Developments. Noyes Publications, 1990
- Ullmann's Encyclopdie der technischen Chemie. 1978, vol. 15, 613-628